## Europäisches Patentamt
## European Patent Office
## Office européen des brevets

(19)

(11) Numéro de publication : **0 445 032 A1**

(12) # DEMANDE DE BREVET EUROPEEN

(21) Numéro de dépôt : **91400535.0**

(51) Int. Cl.⁵ : **G07C 5/12, G01P 1/12**

(22) Date de dépôt : **27.02.91**

(30) Priorité : **28.02.90 FR 9002505**

(43) Date de publication de la demande :
**04.09.91 Bulletin 91/36**

(84) Etats contractants désignés :
**DE ES GB IT**

(71) Demandeur : **JAEGER**
**2, rue Baudin**
**F-92303 Levallois-Perret (FR)**

(72) Inventeur : **Guillou, Jean-Pierre**
**165 rue St Denis**
**F-92700 Colombes (FR)**

Inventeur : **Clayssen, Michel**
**1 Place du Parc aux Lièvres**
**F-91000 Evry (FR)**
Inventeur : **Garreau, Pascal**
**17 Bis rue des Garennes**
**F-78200 Mantes La Jolie (FR)**
Inventeur : **Boucher, Alain**
**182 rue de Charenton**
**F-75012 Paris (FR)**
Inventeur : **Rabille, Jean-Jacques**
**32 Avenue du Maréchal de Lattre de Tassigny**
**F-94410 Saint Maurice (FR)**

(74) Mandataire : **Warcoin, Jacques et al**
**Cabinet Régimbeau 26, avenue Kléber**
**F-75116 Paris (FR)**

(54) **Enregistreur de route de véhicule à un ou deux disques porte-diagramme, permettant l'enregistrement de plusieurs paramètres d'utilisation du véhicule, lorsque celui-ci est en marche ou à l'arrêt.**

(57)  L'invention concerne un enregistreur de route de véhicule(1) comportant un boîtier fixe (2), une porte (3) articulée sur ledit boîtier (2) un ensemble fonctionnel de montre disposé dans la porte (3) et associé à un mécanisme permettant d'entraîner un ou deux disques porte-diagramme.

Selon l'invention, l'ensemble fonctionnel de montre est un module indépendant interchangeable (300) fixé dans la porte (3) de l'enregistreur (1) ; en outre, l'enregistreur (1) comporte des ensembles fonctionnels sous forme de modules indépendants (100, 200) pour l'enregistrement de la vitesse ou du régime moteur (module 200), et des différents modes d'utilisation du véhicule (module 100). Les modules indépendants et interchangeables (100 ; 200 ; 300) peuvent être ainsi montés, contrôlés, et réparés séparément.

Application aux tachygraphes à un ou deux disques porte-diagramme.

EP 0 445 032 A1

FIG.1

# ENREGISTREUR DE ROUTE DE VEHICULE A UN OU DEUX DISQUES PORTE-DIAGRAMME, PERMETTANT L'ENREGISTREMENT DE PLUSIEURS PARAMETRES D'UTILISATION DU VEHICULE, LORSQUE CELUI-CI EST EN MARCHE OU A L'ARRET

L'invention concerne un enregistreur de route de véhicule à un ou deux disques porte-diagramme, permettant l'enregistrement de plusieurs paramètres d'utilisation du véhicule, lorsque celui-ci est en marche ou à l'arrêt.

L'état général de la technique est illustré par les demandes de brevet européen N° 0 126 374 et N° 0 012 223, les brevets français N° 2 325 024, N° 2 287 686, N° 2 264 332, N° 2 203 549, N° 2188 880, N° 2 014 574, le brevet allemand N° 23 53 988, le brevet belge N° 772 432, les brevets suisses N° 501 925 et N° 490 664, le brevet anglais N° 2 067 291, et le brevet américain N° 3 683 399.

Le type particulier d'enregistreurs de route concerné dans le cadre de la présente invention est celui des enregistreurs ou tachygraphes comportant un boîtier fixe, une porte articulée sur ledit boîtier en face avant de celui-ci, un ensemble fonctionnel de montre disposé dans la porte et associé à un mécanisme permettant d'entraîner un ou deux disques porte-diagramme disposés sur la face intérieure de ladite porte, et des moyens inscripteurs permettant l'enregistrement de plusieurs paramètres d'utilisation du véhicule grâce à des organes scripteurs associés.

De tels enregistreurs sont par exemple décrits dans les demandes de brevet européen N° 0 328 454, N° 0 246122 et N° 0 207 820 de la demanderesse, ces enregistreurs étant plus spécialement prévus pour une application bi-chauffeurs.

Ces enregistreurs comportent des moyens inscripteurs montés directement dans le boîtier ou dans la porte de l'enregistreur, ce qui signifie que le montage de la plupart des pièces mobiles d'entraînement implique de prévoir des axes rapportés, en métal, qui sont chassés dans un bloc métallique, par exemple en aluminium, afin de préserver la précision des différents ensembles fonctionnels.

Il y a ainsi environ 360 pièces constitutives, dont la disposition dans un volume réduit complique les opérations de montage.

Ceci influe naturellement sur le coût de fabrication de tels enregistreurs, mais aussi sur le coût des opérations de montage, de contrôle et/ou de réparation.

En effet, lors du montage des pièces constitutives, il est nécessaire de contrôler le bon fonctionnement de l'enregistreur : or, ceci ne peut se faire qu'après achèvement de toutes les opérations de montage, et selon un contrôle global. En cas de problème observé lors de ce contrôle, il est alors nécessaire de tout démonter, puis de tout remonter, ce qui est fastidieux et coûteux.

De même, lors d'une réparation, il est souvent nécessaire de démonter de nombreuses pièces adjacentes pour pouvoir accéder aux pièces défectueuses. En outre, une fois la réparation effectuée, on retrouve encore le même inconvénient que précédemment au niveau du contrôle de l'enregistreur.

De plus, la multiplicité des axes rapportés pour les pièces tournantes influe sur le risque de blocage en raison des dilatations différentielles des matériaux concernés.

Il apparaît donc nécessaire de repenser la conception de ces enregistreurs pour tenter de remédier à ces inconvénients.

L'invention a pour objet de réaliser un enregistreur de route dont la structure permette de diminuer le nombre de pièces constitutives, tout en facilitant les opérations de montage, de contrôle, et de réparation.

L'invention a également pour but de réaliser un enregistreur de route dans lequel on évite le plus possible la présence d'axes rapportés pour constituer les ensembles fonctionnels, sans que ce soit au détriment de la précision. Outre la diminution du nombre de pièces, ceci permet d'utiliser le maximum de pièces tournantes réalisées en une pièce en matière plastique avec leur propre axe.

Un autre but de l'invention est de réaliser un enregistreur présentant une souplesse élevée de fonctionnement quels que soient le mode de conduite du chauffeur et/ou les modes d'utilisation du véhicule à l'arrêt, et qui soit aisément adaptable pour une application bi-chauffeurs, notamment en pouvant utiliser les dispositifs inscripteurs d'un enregistreur à deux disques porte-diagramme tel que décrit dans la demande de brevet européen N° 0 328 454 de la demanderesse.

L'invention a aussi pour but de réaliser un enregistreur comportant un organe scripteur associé à l'enregistrement du régime moteur, monté dans la porte de l'enregistreur, comme décrit dans la demande de brevet européen N° 0 328 454 précitée, tout en pouvant fonctionner indifféremment avec un ou deux disques porte-diagramme, l'inscription se faisant sur la face inférieure du disque unique ou du premier disque (en application bi-chauffeurs).

Il s'agit plus particulièrement d'un enregistreur de route de véhicule, comportant un boîtier fixe, une porte articulée sur ledit boîtier en face avant de celui-ci, un ensemble fonctionnel de montre disposé dans la porte et associé à un mécanisme permettant d'entraîner un ou deux disques porte-diagramme disposés sur la face intérieure de ladite porte, et des moyens inscripteurs permettant l'enregistrement de plusieurs paramètres d'utilisation du véhicule grâce à des organes scripteurs associés, caractérisé par le fait que :

. l'ensemble fonctionnel de montre se présente sous la forme d'un module indépendant interchangeable, comportant un boîtier pouvant se fixer dans la porte de l'enregistreur, dans lequel est logé le mécanisme d'entraînement du ou des disques porte-diagramme, et sur lequel est monté un moteur électrique entraînant ledit mécanisme et la montre de l'enregistreur ; et

. les moyens inscripteurs comprennent des ensembles fonctionnels associés à l'enregistrement de la vitesse, de la distance parcourue, et de différents modes d'utilisation du véhicule à l'arrêt, lesdits ensembles fonctionnels se présentant chacun sous la forme d'un module indépendant interchangeable, comportant un boîtier pouvant se fixer en arrière du boîtier de l'enregistreur, dans lequel sont logés des moyens servant à l'entraînement des organes scripteurs associés lorsque la porte dudit enregistreur est fermée, et sur lequel est monté un moteur électrique actionnant lesdits moyens d'entraînement.

La conception modulaire des ensembles fonctionnels est très intéressante, car elle permet notamment de réaliser des modules standardisés interchangeables, que l'on peut aisément démonter et contrôler séparément.

De préférence, le module fonctionnel indépendant associé à l'enregistrement de la vitesse est monté sur un support recevant une roue d'actionnement de l'organe scripteur associé, ladite roue comportant un premier pignon engrènant avec le pignon de sortie dudit module, et un deuxième pignon engrènant avec une crémaillère faisant partie d'un chariot vitesse qui porte l'organe scripteur associé ; en particulier, la roue d'actionnement entraîne en rotation un moyeu flottant qui est couplé, lorsque la porte de l'enregistreur est fermée, à l'aiguille indicatrice de vitesse montée sur ladite porte.

Avantageusement aussi, un module fonctionnel unique est associé à l'enregistrement de la distance parcourue (odomètre) et des différents modes d'utilisation du véhicule à l'arrêt (activités chauffeur) ; de préférence alors, le module fonctionnel unique comporte deux cames de sortie d'axes parallèles, actionnant respectivement un chariot odomètre et un chariot des activités chauffeur portant l'organe scripteur associé. En particulier dans ce cas, le support du module associé à la vitesse, et le module associé à la distance parcourue et aux différents modes d'utilisation, sont tous deux montés sur une platine intermédiaire rigide fixée en arrière du boîtier de l'enregistreur ; de préférence, la platine intermédiaire supporte également deux rails parallèles assurant le guidage des chariots coulissants vitesse, odomètre, et activités chauffeur. Cette platine assure ainsi une référence parfaite dans le boîtier de l'enregistreur.

Selon un mode de réalisation particulièrement avantageux, le module associé à la vitesse comporte un pignon de sortie supplémentaire permettant une utilisation comme ensemble fonctionnel indépendant associé à l'enregistrement du régime moteur, le boîtier dudit module étant dans ce cas fixé dans la porte de l'enregistreur, à côté du module fonctionnel de montre. Ceci est particulièrement intéressant dans la mesure où un même module interchangeable peut être utilisé soit comme module vitesse, en étant monté dans le boîtier de l'enregistreur, soit comme module compte-tours, en étant monté dans la porte dudit enregistreur.

En particulier dans ce cas, lorsqu'il s'agit d'un enregistreur dans lequel l'organe scripteur associé à l'enregistrement du régime moteur est monté tournant dans la porte dudit enregistreur de façon à permettre une inscription sur la face inférieure du disque porte-diagramme, ou du premier disque porte-diagramme lorsque deux disques sont utilisés en étant superposés de manière isoaxique mais écartés l'un de l'autre dans la zone de ladite inscription, il est intéressant que l'enregistreur comporte un secteur denté dont l'axe est accouplé audit organe scripteur tournant, ledit secteur denté engrènant avec le pignon de sortie supplémentaire du module associé à l'enregistrement du régime moteur. De préférence alors, le pignon de sortie supplémentaire du module associé à l'enregistrement du régime moteur engrène avec le pignon de sortie dudit module, ledit pignon de sortie recevant coaxialement l'axe de l'aiguille compte-tours également montée sur la porte de l'enregistreur.

Ainsi, non seulement les modules fonctionnels peuvent être contrôlés et/ou réparés séparément, mais il est aussi possible de tester des blocs fonctionnels multiples, par exemple la platine avec son module vitesse et son module odomètre/activités chauffeur, mais aussi la porte avec son module de montre et éventuellement son module compte-tours.

Avantageusement, le module fonctionnel de montre comporte un pignon de sortie saillant latéralement du boîtier dudit module, et engrènant avec un plateau porte-disque monté sur la porte de l'enregistreur, de l'autre côté du fond de ladite porte, l'accès dudit plateau étant rendu possible par une fenêtre prévue à cet effet dans le fond de la porte, ainsi que les deux axes coaxiaux associés aux deux aiguilles de la montre et dont les extrémités saillent supérieurement dudit boîtier ; en particulier, le module de montre comporte également une molette de remise à l'heure saillant latéralement du boîtier dudit module.

Plus généralement, il est particulièrement intéressant que le boîtier de chaque module fonctionnel indépendant comporte deux platines complémentaires, sur l'une desquelles est fixé le moteur électrique associé, lesdites platines définissant des paliers pour les axes des parties tournantes des moyens d'entraînement logés dans le boîtier concerné.

En particulier, le boîtier du module associé à la vitesse comporte une platine inférieure en extérieur de laquelle est fixé le moteur électrique associé, et une platine supérieure de laquelle saille, par une échancrure latérale associée, le pignon de sortie dudit module : de préférence alors, la platine supérieure du module présente, en vue d'une utilisation jour l'enregistrement du régime moteur, deux ouvertures laissant dépasser d'une part le pignon de sortie supplémentaire dudit module, et d'autre part une excroissance axiale du pignon de sortie associée à l'aiguille compte-tours.

De même, il est intéressant que le boîtier du module de montre comporte une platine inférieure en extérieur de laquelle est fixé le moteur électrique associé, et une platine supérieure de laquelle saillent les axes des aiguilles de la montre, laissant dépasser le pignon de sortie dudit module ainsi qu'un axe sur lequel tourillonne la molette de remise à l'heure.

En outre, il est avantageux que le boîtier du module odomètre/activités chauffeur comporte une platine supérieure sur laquelle est fixé le moteur électrique associé, et une platine inférieure de laquelle saillent un axe de transmission associé au totalisateur de distance de l'enregistreur et l'extrémité de commande du sélecteur manuel agissant sur les moyens inscripteurs correspondant aux différents modes d'utilisation du véhicule à l'arrêt.

Avantageusement enfin, lorsqu'il s'agit d'un enregistreur dans lequel deux disques porte-diagramme sont prévus pour une utilisation bi-chauffeurs, le module de montre, et l'éventuel module associé à l'enregistrement du régime moteur, sont montés dans la porte de l'enregistreur, dans la zone de l'articulation de celle-ci, de telle façon que l'espace restant soit suffisant pour recevoir une table basculante permettant une inscription simultanée sur la face supérieure du deuxième disque porte-diagramme, ainsi que l'organe scripteur associé et les moyens de support et d'actionnement dudit organe scripteur. En particulier, le module odomètre/activités chauffeur comporte des organes d'entraînement supplémentaires, dont un axe de sortie saille de la platine inférieure du boîtier dudit module, ledit axe de sortie étant, lorsque la porte de l'enregistreur est fermée, en prise avec les moyens d'actionnement de l'organe scripteur réalisant une inscription du deuxième disque porte-diagramme correspondant aux activités du deuxième chauffeur.

D'autres caractéristiques et avantages de l'invention apparaîtront plus clairement à la lumière de la description qui va suivre et des dessins annexés, concernant un mode de réalisation particulier, en référence aux figures, où :

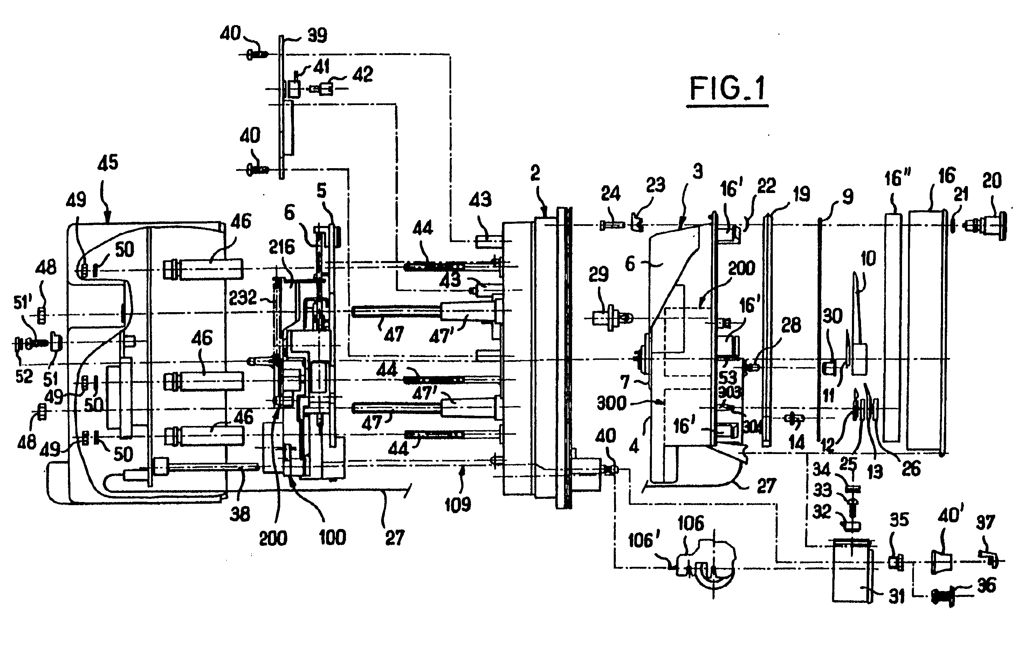

    – la figure 1 est une vue éclatée d'un enregistreur de route conforme à l'invention, dont la porte est en particulier équipée d'un module fonctionnel de montre, et le boîtier d'un module associé à la vitesse et d'un module unique odomètre/activités chauffeur, ces deux derniers modules étant montés sur une platine intermédiaire rigide ;

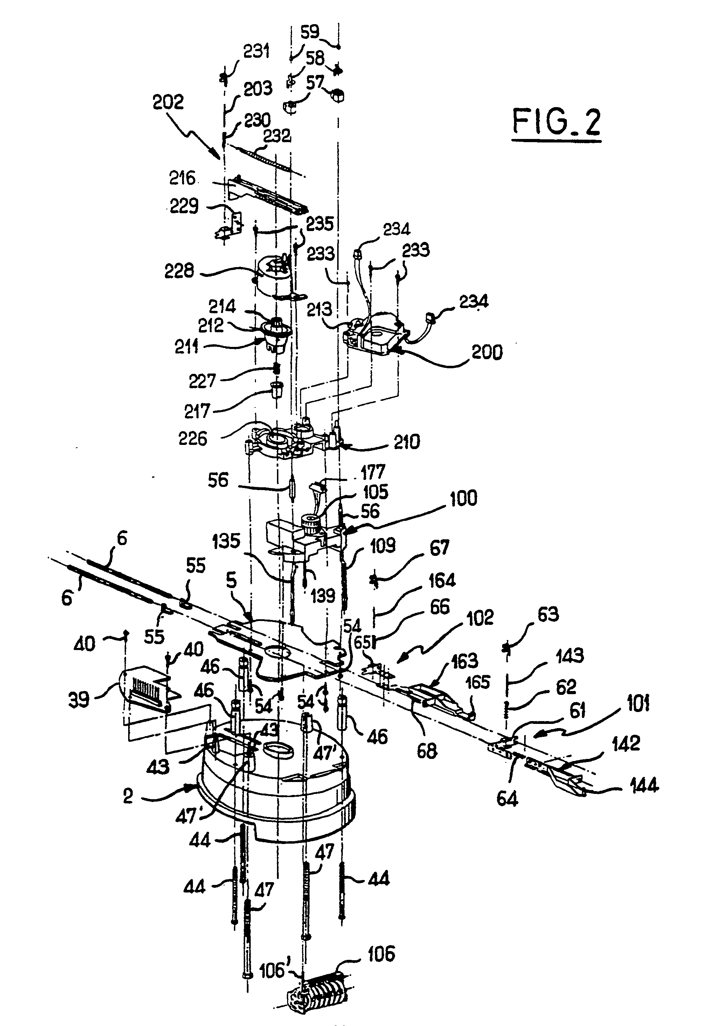

    – la figure 2 est une vue arrière éclatée du boîtier de l'enregistreur précédent, permettant de mieux distinguer le module vitesse et son support associé, et le module unique odomètre/activités chauffeur, ainsi que les moyens inscripteurs correspondants (trois chariots coulissants portant chacun un organe scripteur) ;

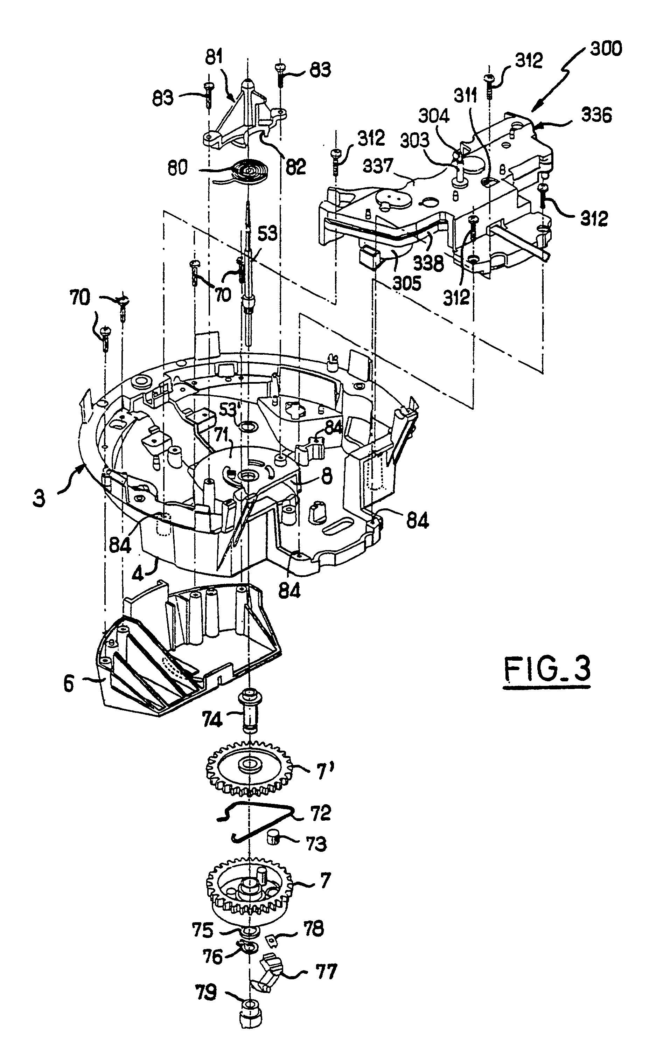

    – la figure 3 est une vue éclatée de la porte de l'enregistreur précédent, prête à recevoir le module de montre, cette vue comportant également la table fixe d'écriture et le plateau porte-disque entraîné par le mécanisme correspondant logé dans le module de montre ;

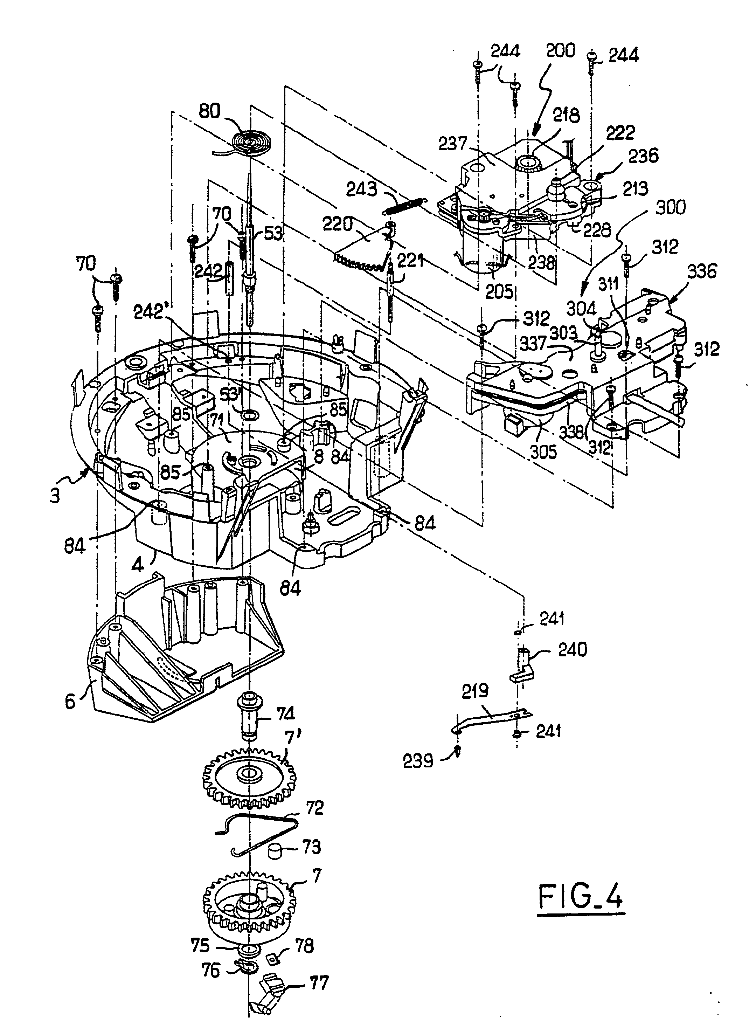

    – la figure 4 illustre une variante de la porte de la figure 3, selon laquelle la porte reçoit également un module compte-tours, lequel est ici identique au module vitesse équipant le boîtier de l'enregistreur, mais avec l'utilisation d'une autre sortie pour actionner l'organe scripteur tournant correspondant (contrairement aux enregistrements de la vitesse, de la distance parcourue, et des activités chauffeur, l'enregistrement du régime moteur est effectué sur la face inférieure du disque porte-diagramme ;

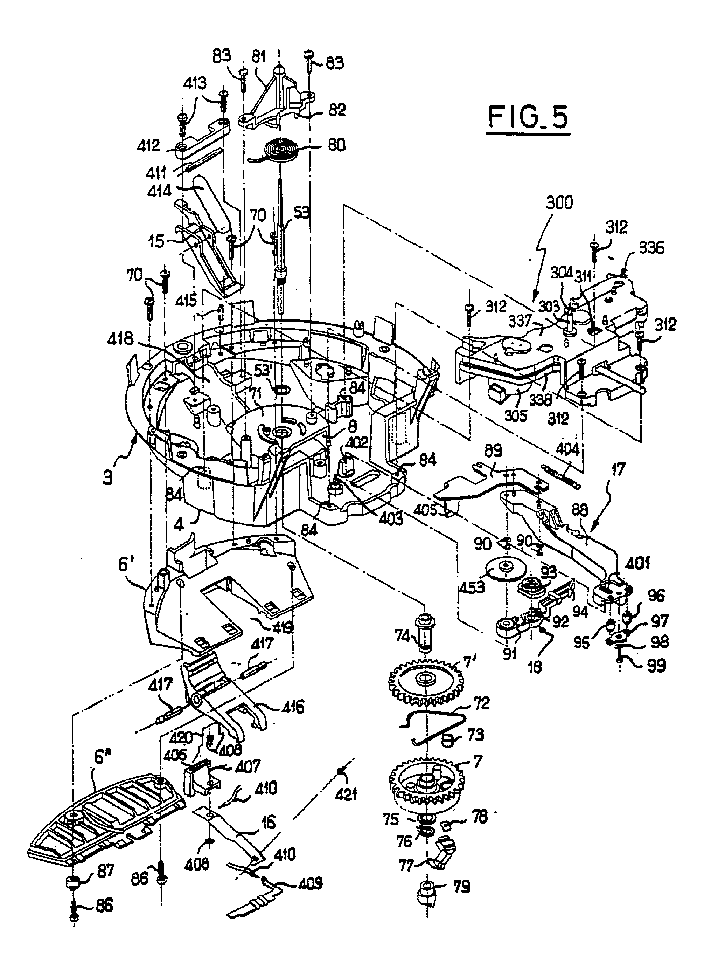

    – la figure 5 illustre une autre variante de la porte de la figure 3, selon laquelle l'enregistreur est utilisé en application bi-chauffeurs, en étant équipé d'un dispositif inscripteur à table mobile pour une inscription inter-disques sur la face supérieure du deuxième disque porte-diagramme, au moyen d'un organe scripteur porté par un chariot coulissant également logé dans la porte de l'enregistreur ;

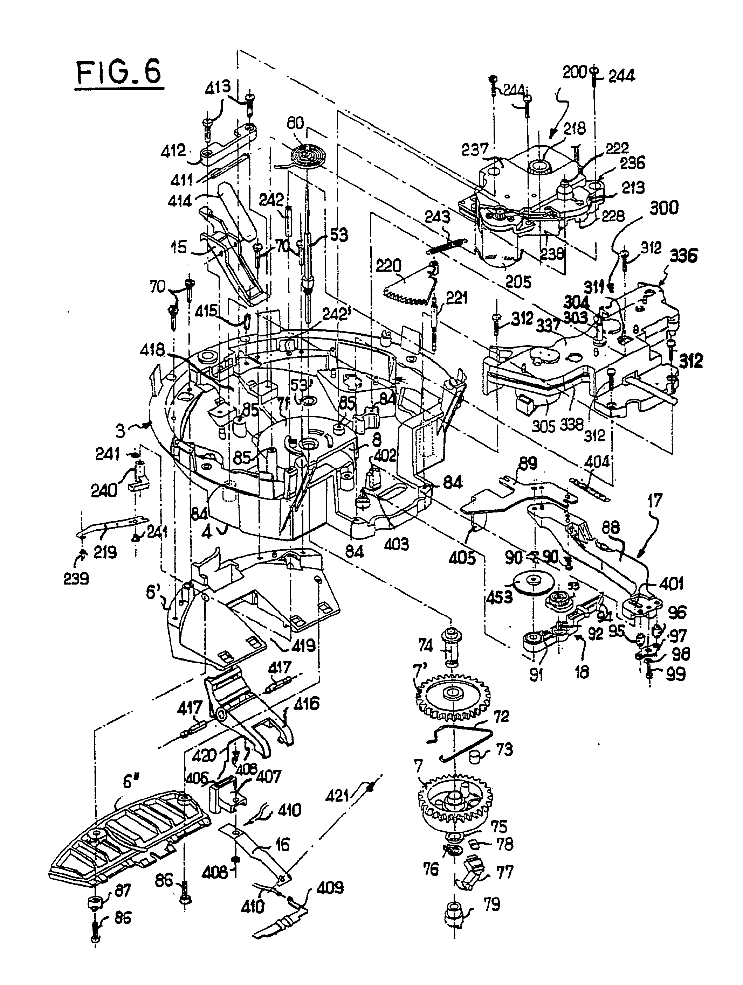

    – la figure 6 illustre encore une autre variante de la porte de la figure 3, rassemblant les deux options supplémentaires des figures 4 et 5, c'est-à-dire avec un module compte-tours (pour une inscription sur la face inférieure du premier disque porte-diagramme) et une application bi-chauffeurs (avec une inscription des activités chauffeur sur la face supérieure du deuxième disque porte-diagramme) ;

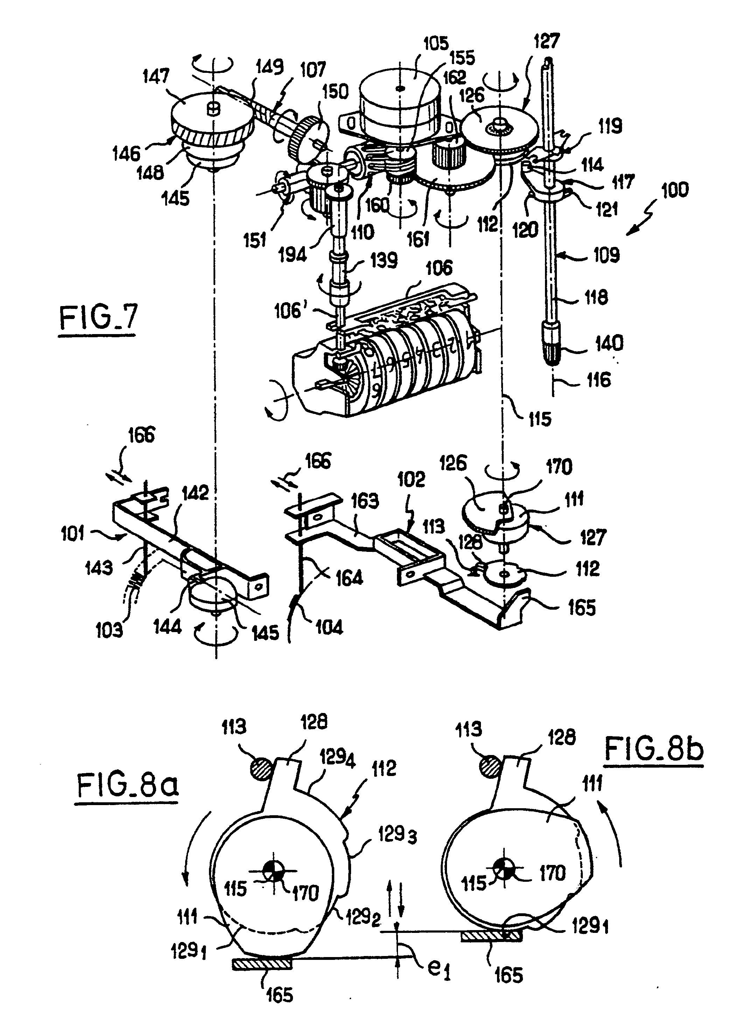

    – la figure 7 est une vue en perspective illustrant un dispositif d'inscription associé au module unique odomètre/activités chauffeur, vue en bas de laquelle ont été représentés le chariot odomètre et le chariot des activités chauffeur, avec les deux cames associées à ce dernier chariot, le moteur électrique (à deux sens de rotation) tournant ici dans un sens direct (véhicule en marche, position dite "de conduite automatique") ;
    – les figures 8a et 8b sont deux vues de dessus partielles, à échelle agrandie. illustrant les deux cames d'actionnement du chariot des activités chauffeur, pour deux positions limites de la came supérieure qui tourne en permanence, (véhicule en marche, position de conduite automatique, avec un tracé d'enregistrement d'amplitude maximale) ;

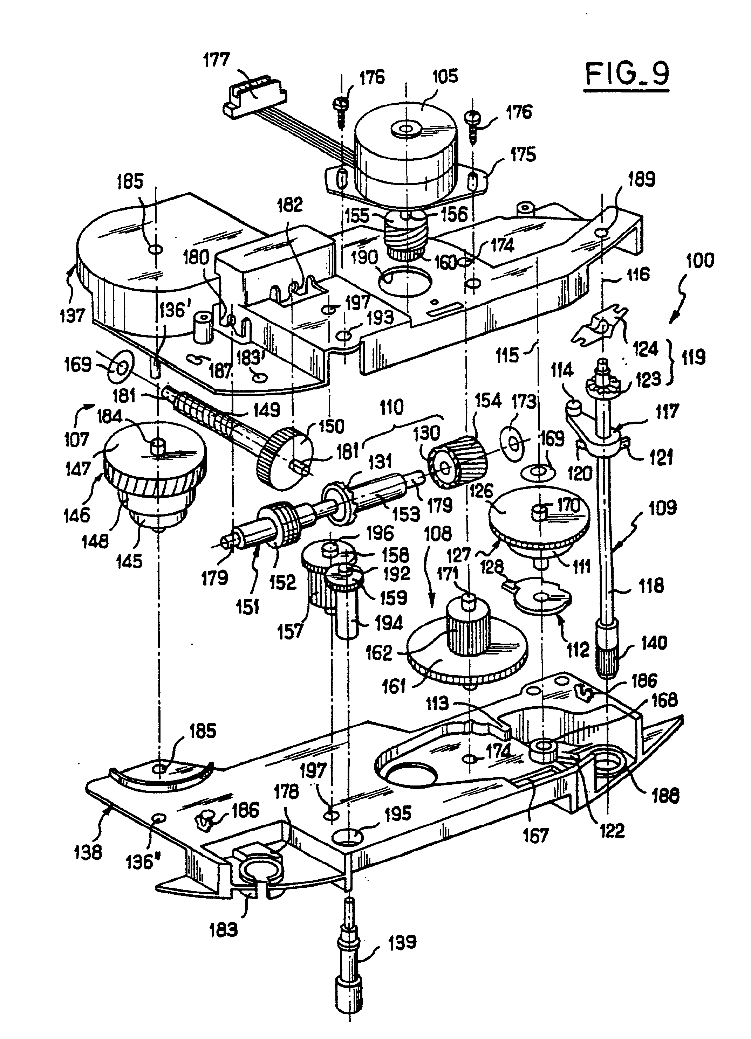

– la figure 9 est une vue éclatée illustrant les différents organes du module odomètre/activités chauffeur de la figure 7, et permettant notamment de distinguer les deux platines complémentaires constituant un boîtier dans lequel sont logés les moyens d'entraînement et sur lequel est monté le moteur électrique ;

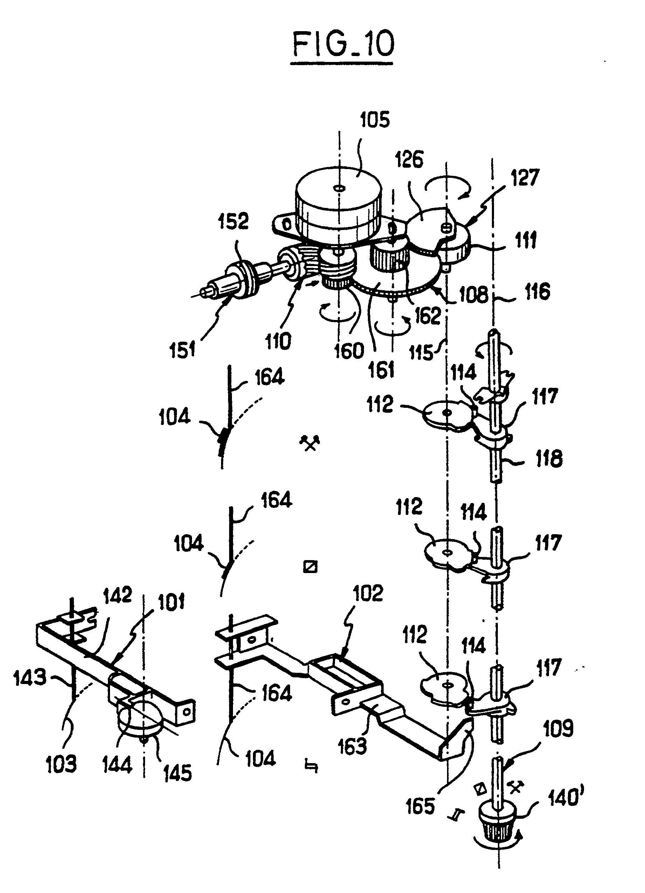

– la figure 10 est une vue en perspective analogue à celle de la figure 7, illustrant le même dispositif mais en train de fonctionner lorsque le véhicule est à l'arrêt, le moteur électrique tournant alors dans un sens inverse, (trois positions d'utilisation sont schématisées l'une en dessous de l'autre, avec pour chaque position la disposition des deux cames, et le tracé d'enregistrement correspondant) ;

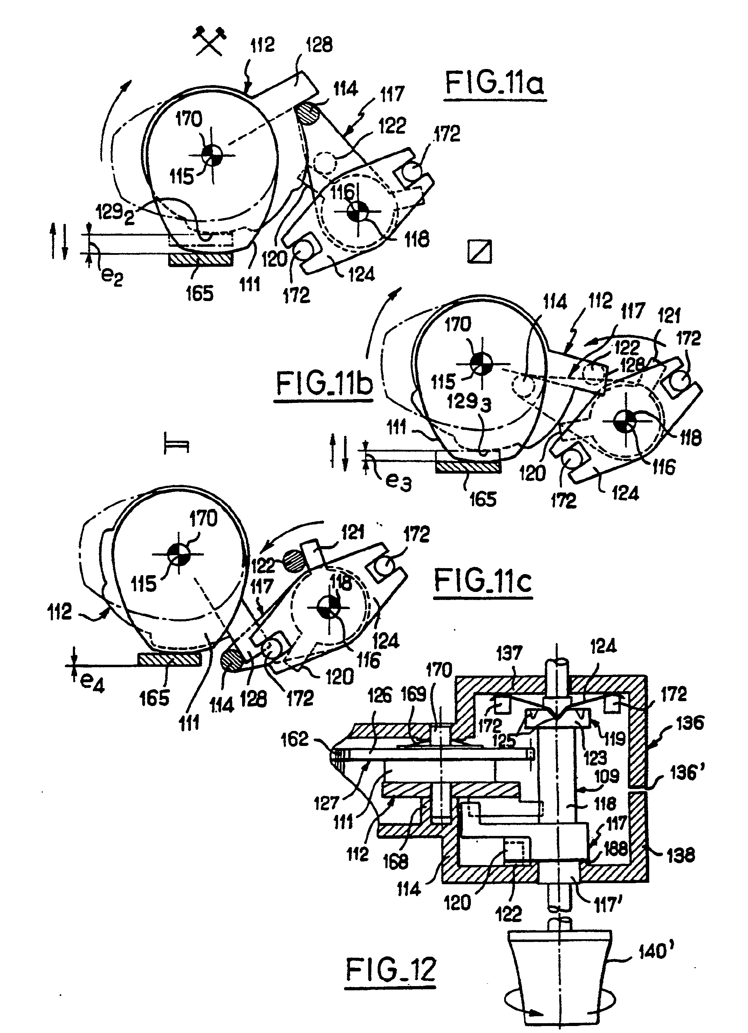

– les figures 11a, 11b et 11c sont des vues de dessus partielles analogues à celles des figures 8a et 8b, illustrant les deux cames d'actionnement et la butée mobile associée à la came inférieure, ainsi que le ressort de l'indexeur associé au sélecteur manuel, pour chacune des trois positions d'utilisation précitées (véhicule à l'arrêt, et positions respectivement de réparation, de chargement/déchargement, et de repos, produisant des tracés d'enregistrement d'amplitude de moins en moins grande selon la position) ;

– la figure 12 est une coupe illustrant une partie du dispositif avec son boîtier fermé, permettant de distinguer les deux cames, la butée mobile portée par le sélecteur manuel, et l'indexeur dudit sélecteur ;

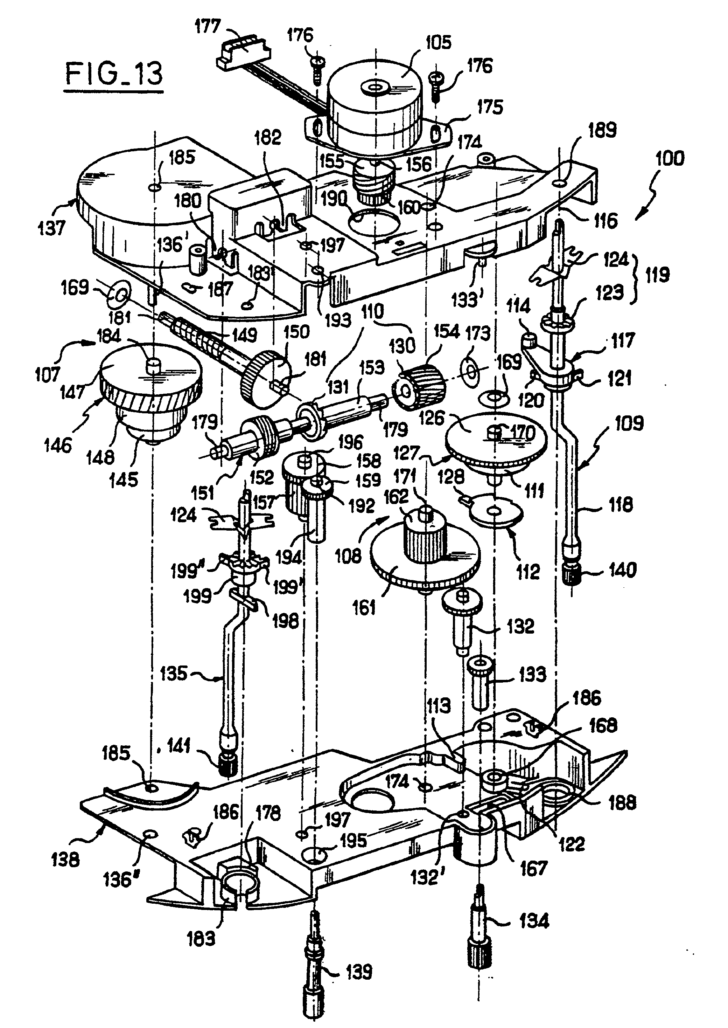

– la figure 13 est une vue éclatée analogue à celle de la figure 9, illustrant le même dispositif équipé de quelques organes supplémentaires en vue d'une application bi-chauffeurs ;

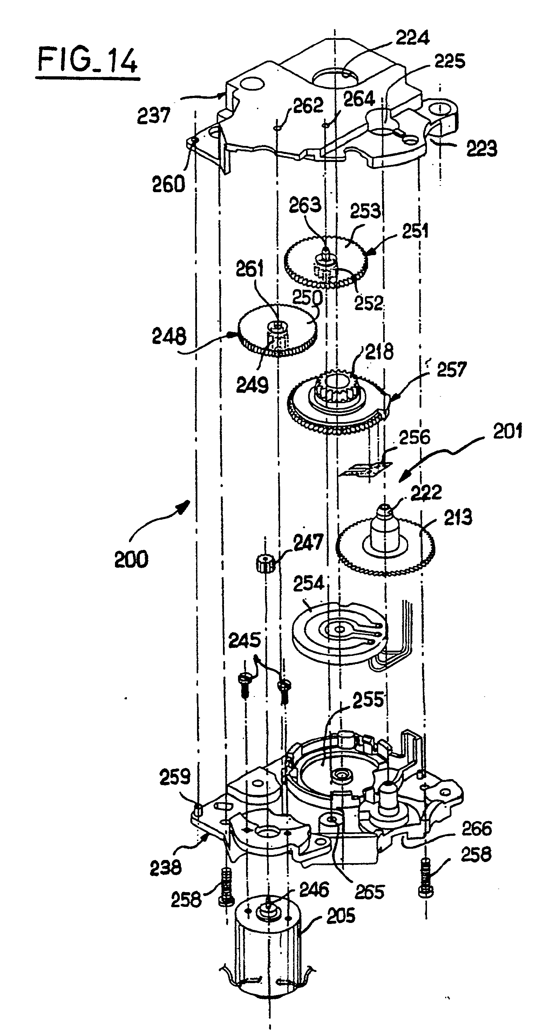

– la figure 14 est une vue éclatée illustrant les différents organes du module vitesse (utilisable également comme module compte-tours) ;

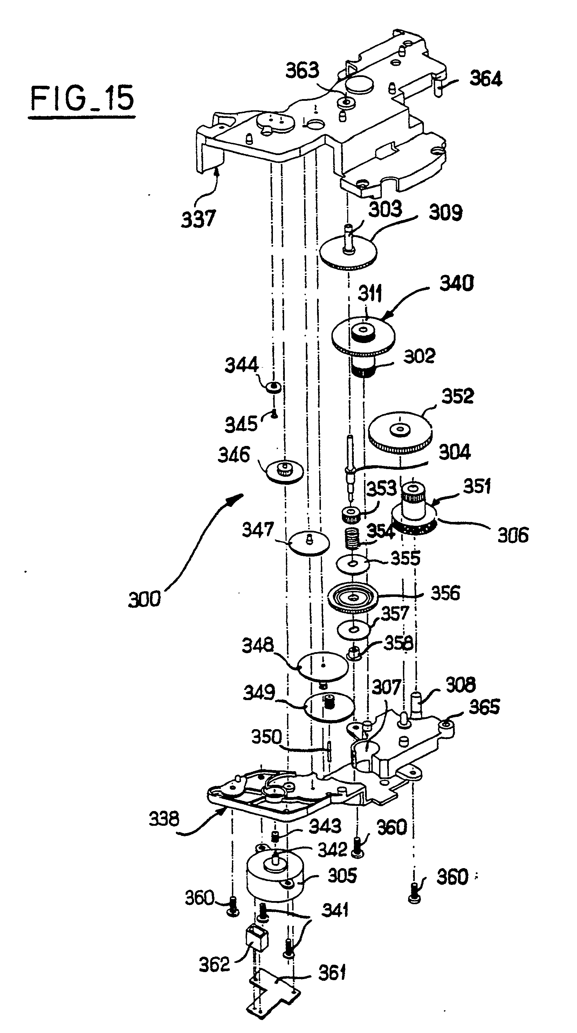

– la figure 15 est une vue éclatée illustrant les différents organes du module de montre.

La figure 1 illustre un enregistreur de route 1 conforme à l'invention, comportant un boîtier fixe 2 et une porte 3 articulée sur ledit boîtier en face avant de celui-ci. Cet enregistreur comporte un ensemble fonctionnel de montre disposé dans la porte 3, et associé à un mécanisme permettant d'entraîner un ou deux disques porte-diagramme disposés sur la face intérieure 4 de ladite porte, et des moyens inscripteurs permettant l'enregistrement de plusieurs paramètres d'utilisation du véhicule grâce à des organes scripteurs associés.

Cette conception générale est bien connue, et on pourra se référer aux demandes de brevet européen citées plus haut, et déposées par la demanderesse, et en particulier la demande de brevet européen N° 0 328 454, incorporée ici à titre de référence.

Selon une caractéristique essentielle de l'invention, l'enregistreur de route est équipé de modules indépendants interchangeables, en particulier d'un module indépendant constituant l'ensemble fonctionnel de montre 300, comportant un boîtier pouvant se fixer dans la porte 3 de l'enregistreur, et dans lequel est logé le mécanisme d'entraînement du ou des disques porte-diagramme. Ainsi que cela sera décrit plus en détail en référence à la figure 15, il est prévu un moteur électrique entraînant ledit mécanisme et la montre de l'enregistreur, ce moteur étant monté sur le boîtier du module indépendant 300, ci-après dénommé module de montre. De plus, les moyens inscripteurs comprennent des ensembles fonctionnels associés à l'enregistrement de la vitesse, de la distance parcourue, et des différents modes d'utilisation du véhicule en marche ou à l'arrêt, ces ensembles fonctionnels se présentent chacun, conformément à l'invention, sous la forme d'un module indépendant interchangeable 200 (module ci-après dénommé module vitesse), 100 (module dénommé module odomètre/activités chauffeur) respectivement, comportant un boîtier pouvant se fixer en arrière du boîtier 2 de l'enregistreur. Dans le boîtier de chaque module indépendant 200 ou 100, sont logés des moyens servant à l'entrainement des organes scripteurs associés lorsque la porte 3 dudit enregistreur est fermée ; sur le boîtier de chaque module, est monté un moteur électrique actionnant lesdits moyens d'entraînement.

Cette conception modulaire des différents ensembles fonctionnels apparaîtra plus clairement à la lumière des autres figures, et fera l'objet d'une description détaillée en regard des figures concernées.

Il convient tout d'abord de décrire succinctement les éléments constitutifs de l'enregistreur 1 illustré à la figure 1.

La porte 3 de l'enregistreur comporte une table fixe 6 complétant la face supérieure de ladite porte notée 4, pour servir d'appui à un disque porte-diagramme (non réprésenté sur la figure 1) dont la zone centrale est en appui sur une couronne de support 7 associée. Ainsi que cela sera décrit ultérieurement, cet enregistreur peut être conçu pour utiliser deux disques porte-diagramme, avec un enregistement inter-disques : une telle conception est par exemple décrite en détail dans la demande de brevet européen N° 0 328 454 de la demanderesse. Dans ce cas, une partie du deuxième disque porte-diagramme (qui est en réalité le premier disque mis en place sur la porte 3 de l'enregistreur), est écartée du plan général de la face d'appui de la porte, afin de permettre d'une part une inscription sur la face inférieure du premier disque porte-diagramme (en particulier une inscription du régime moteur), et d'autre part une inscription sur la face supérieure du deuxième disque porte-diagramme (en particulier une inscription des activités du deuxième chauffeur). La porte 3 reçoit un certain nombre d'équipements qui ont été représentés sur la figure 1 : on distingue ainsi un cadran imprimé 9, derrière lequel on trouve un prisme 19, et un témoin lumineux 28, par exemple une diode électroluminescente, alimenté par un câble souple associé 27, avec son canon de guidage associé 30. On distingue l'extrémité de l'axe 53 portant l'aiguille indicatrice de vitesse 10, avec éventuellement interposition d'une aiguille 11 indicatrice du régime moteur, ainsi qu'une butée 14 de l'aiguille vitesse 10. La porte 3 présente sur sa périphérie des pattes d'encliquetage 16' permettant la fixation d'une lunette 16, avec interposition d'un rehaut 16″. La lunette 16 porte un dispositif de verrouillage à clé, essentiellement constitué par une serrure 20, un joint torique 21, une rondelle élastique 22, un taquet 23, et une vis de fixation 24.

Par ailleurs, la figure 1 permet également de distinguer les axes 303 et 304 d'entraînement des aiguilles de montre, ces axes sortant en fait du module de montre 300 ici simplement schématisé en pointillés. On trouve ainsi successivement une aiguille des heures 12, un capuchon intermédiaire 25, une aiguille des minutes 13, et un capuchon associé 26. La disposition sortante visible ici est connue en soi, mais l'ensemble fonctionnel de montre est cependant, conformément à l'invention, réalisé sous forme modulaire avec un module 300 fixé à l'intérieur de la porte 3 de l'enregistreur. Dans le cas où il est prévu un enregistrement du régime moteur, la porte 3 est équipée d'un module compte-tours 200 (ici schématisé en pointillés), ledit module permettant d'actionner un organe scripteur associé non visible ici réalisant une inscription sur la face inférieure du disque porte-diagramme unique, ou du premier disque porte-diagramme lorsque deux disques sont utilisés, ainsi que cela sera expliqué plus loin, en regard des figures 4 et 6.

Le boîtier 2 de l'enregistreur porte un sélecteur manuel 109, dont l'extrémité saillante 140 reçoit successivement un canon fileté 35, un faux bouton 36, un bouton de commande 140', et un index 37 ; l'autre extrémité du sélecteur manuel 109 est une fourche 38, conformément à la technique habituelle. Ces derniers organes sont montés en face avant d'une lunette de totalisateur 31, dans laquelle est logé un totalisateur de distance 106 dont l'axe d'entraînement 106' est relié à une sortie du module indépendant 100, ainsi que cela sera expliqué plus loin. La lunette de totalisateur 31 reçoit une embase de plombage 32 fixée par une vis associée 33, cette dernière étant recouverte d'un bouchon de plombage 34. Le boîtier porte encore, du côté de la porte 3, un support de lampe 29.

En arrière du boîtier 2 de l'enregistreur, il est prévu de disposer un circuit de programmation 39, fixé par des vis 40 sur des extensions 43 du boîtier, avec un index de survitesse 41 et un axe de commande associé 42. Le boîtier 2 porte, sur des colonnes arrière 47', des goujons de guidage 47 à extrémité filetée, permettant de monter un couvercle arrière de boîtier 45. Des vis 44 (ici trois vis) passent dans des entretoises 46, et permettent une fixation du couvercle 45 par des écrous 49, arec interposition de rondelles 50 ; des écrous 48 sont également vissés en extrémité des tiges 47. En arrière du couvercle 45, il est également prévu une embase de plombage 51 fixée par une vis 51', cette dernière étant recouverte d'un bouchon de plombage clipsé 52.

La conception modulaire de l'enregistreur permet de réaliser un boîtier en matière plastique, étant donné que les modules fonctionnels montés en arrière de ce boîtier sont parfaitement positionnés, en étant fixés sur une platine intermédiaire rigide 5. On distingue sur la figure 1 un module fonctionnel indépendant 200 associé à l'enregistrement de la vitesse, dénommé module vitesse, et un module fonctionnel indépendant 100 associé à l'enregistrement de la distance parcourue et des différents modes d'utilisation du véhicule, dénommé module odomètre/activités chauffeur : en effet, ainsi que cela sera décrit en référence aux figures 7 à 13, il est prévu un module fonctionnel unique 100 associé à l'enregistrement de la distance parcourue et des différents modes d'utilisation du véhicule.

Avant de décrire plus en détail la structure précise de chacun des modules indépendants interchangeables 100, 200, 300, il convient tout d'abord de situer l'agencement spatial de ces différents modules, comme décrit ci-après.

La vue éclatée de la figure 2 permet ainsi de mieux distinguer le module vitesse 200 et son support associé, et le module unique odomètre/activités chauffeur 100. Ainsi que les moyens inscripteurs correspondants.

La platine intermédiaire rigide 5, positionnée et fixée sur le boîtier 2 par les tiges 44, reçoit ainsi les modules fonctionnels 100 et 200, ainsi que les trois chariots coulissants dont chacun porte un organe scripteur. Cette platine comporte des perçages précis, afin de préserver une excellente référence par rapport au boîtier de l'enregistreur pour les organes qu'elle supporte.

La structure des trois chariots coulissants est bien connue, de sorte que celle-ci sera simplement rappelée rapidement.

On distingue tout d'abord des moyens inscripteurs 101 associés a l'enregistrement de la distance parcourue : ces moyens comportent un chariot odomètre 142, portant une équerre de support 61 qui reçoit un organe scripteur 143, avec son ressort 62, et son contact de contrôle 63; le chariot odomètre 142 coulisse sur des rails 6 portés par des équerres 55 montées sur la platine intermédiaire 5, et il est actionné au moyen d'une came en forme de coeur, comme cela sera décrit ci-après en regard de la figure 7, grâce à un ergot saillant 144 prévu à une extrémité dudit chariot.

On trouve ensuite des moyens inscripteurs 102 associés aux activités chauffeur, avec un chariot coulissant 163 portant une équerre de support 65 qui reçoit un organe scripteur 164, avec son ressort 66 et son organe de contrôle de contact 67. Ce chariot activités chauffeur 163 est actionné, grâce à une patte 165 de celui-ci, par une came tournante 111 (non visible sur la figure 2), ainsi que cela sera décrit plus loin en références aux figures 7 à 13.

La platine intermédiaire 5 porte le module odomètre activités chauffeur 100, sur laquelle ledit module est vissé au moyen de vis 54, tout en laissant passer inférieurement un axe de sortie 139 qui est couplé à l'axe de transmission 106' du totalisateur 106, ainsi que les extrémités de commande des sélecteurs manuels 109 et 135 (il s'agit dans ce cas d'une application particulière bi-chauffeurs, et la structure correspondante du module 100 sera décrite plus loin, en se référant à la vue éclatée de la figure 13). Au-dessus du boîtier du module 100, on distingue un moteur électrique 105, qui est ici à deux sens de rotation, ainsi que cela sera décrit plus loin. On distingue également le connecteur 177 associé à ce moteur électrique, et les prolongements 56 des sélecteurs manuels précités, sur lesquels sont montés, de façon connue en soi, des organes de contrôle électrique de positionnement, avec, pour chaque sélecteur manuel, une fourche 57, une lame de contact 58, et un axe d'épaule 59.

Le module vitesse 200 est ici monté sur un support 210 qui est quant à lui fixé sur la platine intermédiaire 5 au moyen de vis 54. Ce support 210 présente un puits central 226 permettant de recevoir une roue 211 d'actionnement de l'organe scripteur associé 203. En fait, la roue d'actionnement 211 comporte un premier pignon 212 engrènant avec le pignon de sortie 213 du module vitesse 200, et un deuxième pignon 214 engrènant avec une crémaillère 215 faisant partie du chariot vitesse 216 qui porte l'organe scripteur précité 203. Comme illustré ici, la roue d'actionnement 211 est logé à l'intérieur d'une cloche 228, qui est fixée par des vis 235 sur le support 210. Les pignons de la roue d'actionnement 211 seront par exemple munis de soixante dents pour le pignon 212, et de vingt dents pour le pignon 214 engrènant avec la crémaillère 215. Le chariot vitesse 216 porte une équerre de support d'organe scripteur 229, sur laquelle coulisse l'organe scripteur 203, affecté de son ressort 230 et de son organe de contrôle par contact 231. Le chariot vitesse 216 coulisse sur les rails 6 précités, en étant en outre recentré par la cloche 228 contre laquelle ledit chariot reste en appui glissant. Le module vitesse peut être ainsi aisément monté sur le support associé 210, en étant fixé par des vis 233. La figure 2 permet également de distinguer les connecteurs de raccordement associés 234. Par ailleurs, la roue d'actionnement 211 entraîne en rotation un moyeu flottant 217, équipé de son ressort 227, ledit moyeu étant couplé, lorsque la porte 3 de l'enregistreur est fermée, à l'aiguille indicatrice de vitesse 10 montée sur ladite porte.

Ainsi, chaque module indépendant 100 ou 200 peut être monté, contrôlé, ou réparé de façon indépendante. De plus, il est aisé de réaliser des tests de contrôle sur l'ensemble des deux modules 100 et 200, en dégageant simplement la platine intermédiaire 5 qui les supporte. On notera à cet effet que ces deux modules indépendants sont fixés par des vis dont les têtes sont disposées du côté accessible de la platine intermédiaire de support 5. Cette platine sera par exemple réalisée en une plaque d'aluminium rigide, de façon à garantir une parfaite référence pour les deux modules fonctionnels interchangeables 100 et 200.

Outre la grande souplesse conférée par la conception modulaire pour les opérations de montage, de contrôle et de réparation, on trouve également d'autres avantages au niveau de la structure de chaque module individuel, dans la mesure où les parties tournantes logées dans ces modules peuvent être désormais réalisées en une seule pièce en matière plastique avec leur propre axe, car le boîtier du module associé définit des paliers pour ces différents axes. On parvient ainsi à diminuer très sensiblement le nombre des pièces constitutives, et pratiquement à supprimer le risque de blocage que l'on trouvait sur les enregistreurs classiques en raison des dilatations différentielles des matériaux concernés.

La figure 3 est une vue éclatée de la porte de l'enregistreur, prête à recevoir un module de montre 300, cette vue montrant également la table d'écriture, et le plateau porte-disque entraîné par le mécanisme associé logé dans le module de montre 300.

La figure 3 permet de distinguer le boîtier 336 du module de montre 300, constitué de deux platines complémentaires 337 et 338. Ainsi que cela sera mieux visible en se reportant à la figure 15, les deux platines complémentaires 337 et 338 définissent des paliers pour les axes des parties tournantes des moyens d'entraînement 301 logés dans le boîtier concerné 336. Le boîtier 336 du module de montre 300 comporte ainsi une platine inférieure 338 en extérieur de laquelle est fixé le moteur électrique associé 305, et une platine supérieure 337 de laquelle saillent les axes 303, 304 des aiguilles de montre 12, 13. Bien que cela ne soit pas visible sur la figure 3, la platine inférieure 338 présente en outre une ouverture laissant dépasser le pignon de sortie dudit module, ainsi qu'un axe sur lequel tourillonne une molette de remise à l'heure (cette ouverture 307 laissant dépasser le pignon de sortie 302, et l'axe 308 sur lequel tourillonne une molette de remise à l'heure 306 sont mieux visibles sur la vue éclatée de la figure 15).

La variante illustrée sur la figure 3 est la plus simple, dans la mesure où elle est prévue pour un seul disque porte-diagramme, et sans utilisation de module compte-tours.

La porte 3 est constituée par un bloc de matière plastique recevant, du côté de sa face intérieure 4, une table d'écriture fixe 6 fixée sur ladite table par des vis 70. De ce même côté, le puits central 71 de la porte 3 reçoit un plateau porte-disque, ici constitué de deux éléments 7 et 7′ complémentaires. Le plateau porte-disque 7 reçoit un ressort 72 et une pastille de blocage 73, de façon que l'ensemble monté tournant sur l'axe central 74 présente une possibilité de rattrapage automatique de jeu de denture, avec un armage de l'ordre d'une demi-dent. Au-delà du plateau porte-disque 7, on retrouve les organes classiques des enregistreurs connus, c'est-à-dire successivement une rondelle 75 un segment d'arrêt 76, un taquet 77, un picot 78, et enfin une bague d'accouplement 79. L'axe 74 du plateau porte-disque 7, 7′ reçoit par ailleurs intérieurement l'axe de l'aiguille vitesse 53, en appui sur le fond du puits central 71 par une rondelle 53′, et sur laquelle on trouve successivement un ressort spiral 80, et une pièce de guidage et de protection 81 dont la partie inférieure 82 constitue une cage de réception dudit ressort spiral, ladite pièce étant fixée au moyen de vis 83 au voisinage du fond du puits central de la porte 3.

Lorsque les éléments de la porte sont assemblés, et que le module de montre 300 est mis en place, en étant fixé au moyen de vis 312 sur des appuis correspondants 84 de la porte 3, le module de montre 300 doit pouvoir assurer normalement la fonction d'entraînement du disque porte-diagramme. A cet effet, le pignon de sortie du module de montre 300 (non visible sur la figure 3, mais porté par un mobile 311 que l'on aperçoit partiellement sur cette figure par une échancrure du boîtier dudit module) engrène directement avec les pignons du plateau porte-disque 7, 7′, l'accès dudit plateau étant rendu possible grâce à une fenêtre 8 prévue à cet effet dans le fond de la porte 3. Il est aisé de constater que la mise en place ou le démontage du module de montre 300 peut se faire aisément, en disposant ou en enlevant simplement les vis de fixation 312, sans qu'il soit nécessaire de démonter d'autres pièces.

La figure 4 illustre une variante de la porte précédente, toujours prévue pour un seul disque porte-diagramme, mais utilisant un module compte-tours.

Conformément à une caractéristique très avantageuse de l'invention, le module 200 associé à la vitesse, et déjà précédemment mentionné, comporte un pignon de sortie supplémentaire 218 permettant une utilisation comme ensemble fonctionnel indépendant associé à l'enregistrement du régime moteur, le boîtier 236 dudit module étant dans ce cas fixé dans la porte 3 de l'enregistreur, à côté du module fonctionnel de montre 300.

Ainsi, un seul module 200 peut être utilisé soit comme module vitesse avec son pignon de sortie 213, en étant monté dans le boîtier de l'enregistreur, soit comme module compte-tours, avec son pignon de sortie supplémentaire 218, en étant alors fixé dans la porte dudit enregistreur. Le pignon de sortie supplémentaire 218 du module 200 est de préférence en prise avec le pignon de sortie 213 dudit module, ce dernier pignon de sortie 213 recevant coaxialement le canon de l'aiguille compte-tours 11 également montée sur la porte 3 de l'enregistreur (la protubérance correspondante 222, saillant de la platine supérieure 237 du module 200, est visible sur la figure 4).

Le boîtier 236 du module 200 comporte ainsi une platine inférieure 238 en extérieur de laquelle est fixé le moteur électrique associé 205, et une platine supérieure 237 de laquelle saille, par une échancrure latérale associée 223 (mieux visible sur la figure 14), le pignon de sortie 213 dudit module. La platine supérieure 237 du module 200 présente, en vue d'une utilisation pour l'enregistrement du régime moteur, deux ouvertures, dont l'une laisse dépasser le pignon de sortie supplémentaire 218 dudit module, et l'autre l'excroissance axiale 222 du pignon de sortie 213 associé à l'aiguille compte-tours 11.

Pour l'enregistrement du régime moteur, il est prévu un organe scripteur 219 monté tournant dans la porte 3 de l'enregistreur de façon à permettre une inscription sur la face inférieure du disque porte-diagramme : l'organe scripteur 219, comportant en extrémité libre une pointe d'inscription 239, est fixé sur son support 240 par rivetage classique 241, la liaison à travers la paroi du fond de la porte (par le perçage associé 242′) se faisant par l'intermédiaire d'un axe 242 chassé sur le support 240. La transmission du mouvement entre le pignon de sortie supplémentaire 219 du module compte-tours 200 et l'organe scripteur associé 219 est alors assurée grâce à un secteur denté 220, dont l'axe est accouplé à l'axe 242 dudit organe scripteur tournant, ledit secteur denté engrènant directement avec le pignon 218 dudit module. L'axe 221 est de préférence chassé sur l'axe 242 précité, de sorte que la rotation du pignon de sortie supplémentaire 218 entraîne automatiquement une rotation identique de l'organe scripteur tournant 219. La figure 4 illustre également un ressort de rappel 243 dont une extrémité est montée sur le secteur denté 220, l'autre extrémité étant reliée au boîtier 236 du module compte-tours 200.

Le module compte-tours 200 est aisément mis en place et fixé par des vis 244 sur des appuis correspondants 85 de la porte 3. Il convient de noter que cette variante permet de supprimer la pièce 81 de la variante de la figure 3, la cage de spiral étant en effet dans ce cas remplacée par une partie de la platine inférieure 238 du module compte-tours 200.

la comparaison des figures 3 et 4 permet de constater qu'il est aisé d'ajouter ou de supprimer l'option compte-tours sur la porte de l'enregistreur, grâce à la géométrie de la porte prévue à cet effet.

La figure 5 illustre une autre variante de la porte de la figure 3, selon laquelle l'enregistreur est utilisé en application bi-chauffeurs, en étant équipé d'un dispositif inscripteur à table mobile pour une inscription inter-disques sur la face supérieure du deuxième disque porte-diagramme, au moyen d'un organe scripteur porté par un chariot coulissant également logé dans la porte de l'enregistreur.

Dans ce cas, le montage du module de montre 300 est tel que l'espace restant est suffisant pour disposer une table basculante 15 permettant une inscription sur la face supérieure du deuxième disque porte-diagramme, ainsi que l'organe scripteur associé 16 et les moyens de support 17 et d'actionnement 18 dudit organe scripteur.

Le dispositif inscripteur particulier à table basculante illustré ici est décrit en détail dans la demande de brevet européen N° 0 328 454 de la demanderesse, à laquelle il convient de se reporter pour une description détaillée des différents organes constitutifs. De ce fait, les organes qui sont illustrés ici ne seront décrits que très rapidement.

La table fixe est ici en deux parties, avec une partie principale 6' fixée à la porte 3 par les vis 70, et un couvercle de table 6'' fixé sur cette partie principale par des vis 86, avec subsidiairement interposition d'un organe de plombage 87. Cette réalisation en deux parties permet de disposer un cache mobile d'escamotage 416 monté tournant par ses axes 417 sur la partie principale 6' de la table fixe. On distingue également un étrier ressort 420 assurant le rappel du cache mobile d'escamotage 416. Il est à noter que la partie principale 6' de la table fixe présente une fenêtre centrale 419 permettant le libre débattement en rotation du cache mobile d'escamotage 416.

Par ailleurs, on constate que la porte présente également une ouverture 418 définissant un puits radial dans lequel est disposée une table mobile 15, articulée autour de son axe 411. On distingue également une lame ressort 414 assurant le rappel de la table mobile 15, ainsi qu'un axe 415 servant au guidage du coulisseau 88 en coopérant avec l'équerre 89 de celui-ci, et une barrette de maintien 412 fixée sur la porte 3 par des vis 413. Il est rappelé que la table mobile 15 sert d'appui pour une partie incurvée du deuxième disque porte-diagramme passant sous la table fixe, afin d'effectuer un enregistrement, sur la face supérieure de ce disque, des activités chauffeur à l'aide de l'organe scripteur associé 16.

L'organe scripteur 16, portant sa pointe d'inscription 421, est monté sur un cavalier de support 407 ; une lame de contact 409 assure une détection de l'absence du disque, et on reconnaît les organes de raccordement 410 associés à ce contrôle par contact électrique. Le cavalier 407 portant l'organe scripteur 16 est monté par sa fente 406 sur une patte 405 d'une équerre 89 formant l'extrémité d'un coulisseau 88. Ce coulisseau, mobile en translation, ici est guidé par une fente 401 à son extrémité arrière, dans laquelle passe une pointe de guidage fixe 402 solidaire du fond de la porte 3 de l'enregistreur. L'équerre 89 est fixée sur le coulisseau 88 par des rivetages 90. Pour ce qui est des moyens d'actionnement 18 de l'organe scripteur 16, on reconnaît un levier pivotant 91 articulé sur un axe fixe 403 de la porte, ledit levier portant, par son axe central 92, une came tournante 93 dont le pignon engrène sur un pignon 453 également porté par l'axe 403 précité. Il convient d'observer que ce pignon 453 engrène directement, lorsque la porte de l'enregistreur est fermée, avec le pignon de sortie 134 du module odomètre/activités chauffeur 100 illustré en figure 13, ainsi que cela sera décrit plus loin en référence à cette figure. L'extrémité arrière du coulisseau 88 porte par ailleurs deux cames 95, 96 fixées par une barrette inférieure 97 au moyen d'une vis 99, avec interposition d'une rondelle 98. La rotation du pignon 453 entraîne la rotation de la came tournante 93, portant contre la came 95, pour l'oscillation du coulisseau 88, et donc de l'organe scripteur associé 16. Il convient d'observer que deux cames sont utilisées ici : une came supplémentaire 96 sert de point zéro, tandis que la came 95 précitée sert pour l'amplitude d'oscillation du coulisseau. Par ailleurs, un ressort 404 assure le rappel du coulisseau 88 de telle façon que la came 95 soit maintenue au contact de la came tournante 93, et que la came 96 soit, quant à elle, maintenue contre une butée fixe prévue sur le boîtier 336 du module de montre 300.

La figure 6 illustre encore une autre variante de la porte de la figure 3, dans laquelle sont rassemblées les deux options supplémentaires des figures 4 et 5, c'est-à-dire avec un module compte-tours 200 (pour une inscription sur la face inférieure du premier disque porte-diagramme) et une application bi-chauffeurs (avec une inscription des activités chauffeur sur la face supérieure du deuxième disque porte-diagramme).

On retrouve ainsi, par rapport à la figure 5 précédente, le module compte-tours 200, actionnant, par l'intermédiaire du secteur denté 220, l'organe scripteur associé 219 monté tournant sur la porte 3 de l'enregistreur. La figure 6 permet de constater que le module de montre 300 et le module compte-tours 200 sont tous deux montés dans la porte 3 de l'enregistreur dans la zone de l'articulation de celle-ci, de telle façon que l'espace restant soit encore suffisant pour disposer la table basculante 15 permettant une inscription sur la face supérieure du deuxième disque porte-diagramme, ainsi que l'organe scripteur associé 16 et les moyens de support 17 et d'actionnement 18 dudit organe scripteur.

Après la description détaillée de l'agencement des différents modules fonctionnels interchangeables, c'est-à-dire le module odomètre/activités chauffeur 100. Le module 200 pouvant être soit le module vitesse, soit le module compte-tours, et enfin le module de montre 300, on va maintenant décrire de façon détaillée la structure de chacun de ces modules fonctionnels.

Sur la figure 7, on distingue un module d'inscription 100, et des premiers moyens inscripteurs 101, essentiellement constitués par un chariot coulissant 142 (chariot odomètre) qui porte un stylet d'inscription 143 produisant un tracé d'enregistrement 103 sur un disque porte-diagramme. Ce chariot odomètre est monté dans le boîtier de l'enregistreur (non représenté ici), pour osciller selon des flèches 166, sous l'action d'une came 145 en forme de coeur contre laquelle le chariot odomètre 142 est en appui par l'intermédiaire d'une portion associée saillante 144. Conformément à la technique classique, ces premiers moyens inscripteurs 101 sont actionnés par des moyens d'entraînement associés 107 qui sont en prise avec le moteur électrique 105 du totalisateur de distance 106. Il est en général prévu des moyens d'entraînement tels que la came 145 fasse un tour (de creux à creux) pour 10 km, ce qui correspond à un aller et retour sur l'enregistrement. Des seconds moyens inscripteurs 102 comportent un chariot 163, également monté dans le boîtier de l'enregistreur, et coulissant parallèlement au chariot odomètre 142 comme schématisé par les flèches 166. Ce chariot 163 (chariot des activités chauffeur), porte un stylet 164 produisant un tracé d'enregistrement 104 sur le disque porte-diagramme précité, ce tracé d'enregistrement 104 présentant cependant des épaisseurs variables correspondant aux différents modes d'utilisation du véhicule en marche ou à l'arrêt.

Le moteur électrique 105 de la chaîne odométrique est ici à deux sens de rotation, avec un sens direct associé à une période pendant laquelle le véhicule est en marche et dans lequel ledit moteur actionne simultanément les premiers et les seconds moyens inscripteurs 101 et 102, et un sens inverse associé à une période pendant laquelle le véhicule est à l'arrêt et dans lequel ledit moteur actionne seulement les seconds moyens inscripteurs 102.

Ainsi, le module d'inscription 100 comporte un prélèvement de puissance sur le moteur d'entraînement de la chaîne odomètre pour l'actionnement du chariot des activités chauffeur lorsque le véhicule est à l'arrêt. Le fait de prévoir un moteur électrique à deux sens de rotation permet en l'espèce un double mode de fonctionnement, évitant non seulement la présence d'un moteur spécial supplémentaire, mais également une prise de puissance sur la montre ou sur le moteur de la chaîne vitesse. Ceci est particulièrement intéressant dans la mesure où le moteur de la chaîne odomètre est d'ordinaire déjà prévu relativement puissant, ce qui permet de disposer d'une réserve de puissance conférant une sécurité de fonctionnement très élevée, tout en réduisant notablement la consommation sur parc lorsque le véhicule est à l'arrêt. En effet, ceci permet d'utiliser un moteur de faible puissance pour l'entraînement de la montre, ce qui a bien évidemment pour effet de diminuer d'autant la consommation sur parc.

Il convient cependant d'organiser les moyens d'entraînement des seconds moyens inscripteurs 102 de telle façon que, lorsque le moteur électrique 105 tourne en sens inverse, c'est-à-dire lorsque le véhicule est à l'arrêt, il n'y ait aucun entraînement du totalisateur de distance 106 et aucun actionnement du chariot odomètre 142. A cet effet, le totalisateur 106 est relié au moteur électrique 105 de la chaîne odométrique par une liaison d'accouplement débrayable 110 permettant d'entraîner ledit totalisateur et d'actionner lesdits premiers moyens enregistreurs seulement lorsque le moteur tourne dans le sens direct. Cette liaison d'accouplement débrayable 110 sera décrite plus en détail en regard des vues éclatées des figures 9 et 13, sur lesquelles la structure de cette liaison est mieux visible. Si l'on excepte la présence de la liaison d'accouplement débrayable 110 précitée, les moyens transmettant le mouvement depuis le moteur électrique 105 jusqu'au totalisateur 106 et au chariot odomètre 142 sont de conception classique. En se référant aux figures 7 et 9, on distingue ainsi une vis sans fin 155 montée sur l'arbre de sortie 156 du moteur 105, cette vis sans fin engrènant avec un pignon 154 qui entraîne (lorsque le moteur 105 tourne en sens direct) une autre vis sans fin coaxiale 152 faisant tourner le pignon 150 et une vis sans fin 149 coaxiale audit pignon et solidaire de celui-ci. La vis sans fin 149 fait tourner une pièce 146 constituée d'une portion supérieure 147 en forme de pignon d'engrènement, d'une portion intermédiaire entretoise 148, et d'une portion inférieure 145 qui n'est autre que la came en forme de coeur précitée. Par ailleurs, la même ris sans fin 152 entraîne simultanément un pignon 157, surmonté d'un autre pignon 158 coaxial qui engrène avec un pignon 159 se prolongeant par une portion inférieure lisse 194 prévue pour recevoir l'axe de transmission 139 qui est couplé à l'arbre d'entrée 106' du totalisateur de distance 106. La figure 9 permet de distinguer une pièce 151 portant la vis sans fin 152 précitée, et se prolongeant par une portion cylindrique 153 sur laquelle est monté à glissement le pignon 154 précité. La pièce 151 porte subsidiairement une couronne dentée 131 qui peut coopérer avec une couronne homologue 130 prévue en extrémité du pignon 154. Ces couronnes dentées 130, 131 constituent la liaison d'accouplement 110 précitée, dans la mesure où les dents de scie de ces couronnes réalisent un entraînement positif lorsque le moteur électrique 105 tourne dans le sens direct, mais glissent les unes sur les autres à la façon d'un cliquet lorsque ledit moteur tourne dans le sens inverse. Un paillon 173, en forme de rondelle Belleville, permet d'assurer un force d'application élastique sur les deux couronnes dentées 130, 131. Ainsi, lorsque le moteur électrique 105 tourne en sens inverse, la liaison 110 est débrayée, et évite toute transmission de mouvement par ledit moteur vers le totalisateur 106 ou vers le chariot odomètre 142. A titre indicatif, le pignon 154 présentera 16 dents, le pignon 157 présentera 25 dents, le pignon 158 présentera 35 dents, et le pignon 159 présentera 20 dents.

Conformément à un mode de réalisation particulièrement avantageux illustré ici, les seconds moyens enregistreurs 102 sont actionnés par des moyens d'entraînement 108 comportant deux cames coaxiales 111, 112 superposées, dont une première came 111 qui est en permanence en prise avec le moteur électrique 105, et une deuxième came 112 qui est entraînée par friction par ladite première came, et ce jusqu'à une position de butée prédéterminée.

La première came 111 fait ici partie d'une pièce unique 127 dont l'autre portion est un pignon coaxial 126 permettant son entraînement en rotation par le moteur électrique 105.

Ainsi, les figures 7 et 9 permettent de distinguer, sur l'arbre de sortie 156, et au-delà de la vis sans fin 155, un pignon 160 engrènant avec un pignon 161 qui est surmonté d'un pignon de plus faible diamètre 162. Ce pignon 162 est en prise avec la portion en forme de pignon 126 de la pièce 127 présentant inférieurement la came 111 précitée. Ainsi, les moyens d'entraînement du chariot des activités chauffeur 163 comportent successivement le pignon 160, le pignon 161, le pignon 162, le pignon 126, et enfin la première came 111 qui produit le mouvement alternatif du chariot 163 par l'intermédiaire d'une patte 165 de celui-ci. La deuxième came 112, qui est entraînée par friction par la première came 111 jusqu'à une position de butée prédéterminée, permet de définir, par la portion concernée de son contour lors de la position de butée concernée, l'amplitude du tracé d'enregistrement 104.

Deux systèmes de butée sont ici prévus pour arrêter la deuxième came 112, selon le sens de rotation du moteur électrique 105.

Il est ainsi tout d'abord prévu une première butée fixe 113 pour arrêter la deuxième came 112 lorsque le moteur 105 tourne dans le sens direct. Ce mode de fonctionnement correspond précisément aux sens de rotation indiqués sur la figure 7, conformément aux explications données ci-après en référence aux figures 8a et 8b.

Les figures 8a et 8b permettent en effet de distinguer les deux cames superposées 111 et 112, et la patte 165 du chariot des activités chauffeur, pour deux positions limites de la came supérieure 111 qui, rappelons-le, tourne en permanence du fait de son entraînement direct par le moteur électrique 105. Ce mode de fonctionnement correspond au cas où le véhicule est en marche, et la position est une position de conduite automatique produisant un tracé d'enregistrement d'amplitude maximale. En effet, la came supérieure 111 tourne dans le sens anti-horaire, ce qui a amené la came inférieure 112 en appui, par l'intermédiaire d'une patte radiale saillante 128 de celle-ci, contre la butée fixe 113 précitée. La came inférieure 112 reste alors dans cette position, alors que la came supérieure 111 continue à tourner en permanence. Dans ce cas, la deuxième came 112 qui est une pièce plate à profil étagé est dans une position telle que son secteur $129_1$ de plus faible rayon est périodiquement contacté par la patte 165 du chariot des activités chauffeur, comme cela est illustré à la figure 8b. Ainsi, en position de conduite automatique, on trouvera une amplitude notée $e_1$ sur les figures 8a et 8b, qui est maximale pour l'oscillation du chariot 163 des activités chauffeur, de sorte que le tracé d'enregistrement 104 présente alors son épaisseur maximale.

Il est par ailleurs prévu une butée mobile 114 couplée au sélecteur manuel 109, pour arrêter la deuxième came 112 lorsque le moteur 105 tourne dans le sens inverse, l'axe 115 des deux cames 111, 112 étant naturellement parallèle à l'axe 116 dudit sélecteur manuel. Ainsi que cela est mieux visible sur la vue éclatée de la figure 9, la butée mobile 114 est ici portée par une pièce de butée 117 montée sur la tringle 118 du sélecteur manuel 109, ladite pièce de butée étant affectée d'un indexeur 119 marquant chacune des positions dudit sélecteur manuel pouvant être sélectionnées.

Ce mode de fonctionnement correspond à une situation dans laquelle le véhicule est à l'arrêt. Il convient alors de se reporter à la figure 10, et aux vues schématiques des figures 11a, 11b et 11c.

Le moteur électrique 105 tournant en sens inverse, la liaison d'accouplement 110 est débrayée, de sorte que le chariot odomètre 142 n'est pas actionné, ce qui correspond à un tracé d'enregistrement 103 réduit à une simple ligne, le totalisateur 106 (non représenté sur la figure 10) n'étant bien évidemment pas entraîné en sens inverse grâce au débrayage de ladite liaison. Le chariot véritablement actif dans ce mode de fonctionnement est le chariot 163 des activités chauffeur. On a représenté ici trois positions différentes du sélecteur manuel 109, correspondant à des situations de repos (⇥),

de chargement/déchargement (⊠),

et de réparation (✕).

Ces trois positions du sélecteur manuel 109 sont marquées grâce à un indexeur 119, qui se présente ici sous la forme d'une roue crantée 123 montée sur la tringle 118 du sélecteur manuel 109, et par une lame ressort bloquée en rotation 124, qui coopère avec l'un des crans 125 de ladite roue crantée.

Par ailleurs, la pièce de butée 117 portant la butée mobile 114 présente deux taquets saillant radialement 120, 121, afin de limiter le débattement angulaire de ladite pièce de butée par coopération avec une seconde butée fixe 122.

La came supérieure 111 tourne maintenant dans le sens horaire, ce qui entraîne la deuxième came 112, par friction, jusqu'à ce que celle-ci soit en appui, par l'intermédiaire de sa patte radiale saillante 128, contre la butée mobile 114. On conçoit alors aisément que la position de la butée mobile 114 va permettre de disposer l'un quelconque des secteurs circulaires du profil étagé en regard de la patte 165 du chariot des activités chauffeur 163.

– Figure 11a: il s'agit ici d'une position du sélecteur manuel correspondant à un mode d'utilisation du type réparation. Dans cette position, le second secteur circulaire $129_2$, présentant un rayon légèrement supérieur au secteur précédent $129_1$ qui était concerné en position de conduite automatique, se trouve en regard de la patte 165, ce qui produit une amplitude d'oscillations $e_2$. Dans cette position, le taquet 120 du sélecteur manuel 109 est en appui contre la seconde butée fixe 122.

– Figure 11b: le sélecteur manuel 109 est dans une position correspondant à un mode d'utilisation du type chargement/déchargement. Dans ce cas, la pièce de butée 117 a subi une rotation dans le sens anti-horaire par rapport à la position précédente, de sorte que la position d'appui de la came inférieure 112 contre la butée mobile 114 a permis d'amener le troisième secteur circulaire $129_3$ en regard de la patte 165 du chariot des activités chauffeur. Dans ce cas, on trouvera une amplitude d'oscillations $e_3$, plus faible que l'amplitude précédente, pour le tracé d'enregistrement 104.

– Figure 11c: le sélecteur manuel 109 est dans une position correspondant à un mode d'utilisation du type repos. La pièce de butée 117 a subi alors une nouvelle rotation par rapport à la position précédente, cette rotation étant en fait limitée par l'appui de l'autre taquet 121 du sélecteur manuel 109 contre la butée fixe associée 122. Une nouvelle position d'appui de la came inférieure 112 contre la butée mobile 114 a alors permis d'amener le quatrième secteur circulaire $129_4$, qui est le secteur circulaire de plus grand rayon du profil étagé de cette came, en regard de la patte 165 du chariot des activités chauffeur. On trouve alors une amplitude d'oscillations $e_4$ qui est naturellement la plus faible, cette amplitude pouvant même être nulle, de telle sorte que le tracé d'enregistrement 104 se réduit dans ce cas à une simple ligne.

La figure 10 permet de distinguer, les différentes positions du sélecteur manuel 109 lorsque le véhicule est à l'arrêt, ces trois positions d'utilisation étant schématisées l'une en dessous de l'autre, avec pour chaque position la disposition de la came inférieure 112 et de la butée mobile associée 114, avec le tracé d'enregistrement 104 correspondant.

Le moteur électrique 105 de la chaîne odométrique, prévu pour tourner dans deux sens d'orientation, sera de préférence un moteur pas-à-pas. Il est par ailleurs intéressant d'affecter une temporisation au moteur électrique 105, de façon à retarder pendant un laps de temps prédéterminé l'inversion dudit moteur en cas d'arrêt du véhicule sans coupure de son moteur. En prévoyant une temporisation électronique d'une durée d'environ une minute, cela permet d'éviter une inversion inopinée du sens de rotation lorsque le véhicule est en situation d'arrêt de courte durée (par exemple devant un feu de signalisation). Ainsi, si le véhicule s'arrête, son moteur n'étant pas coupé, le moteur électrique 105 continue encore à tourner dans le sens direct, en position de conduite automatique.

En outre, il est également intéressant de prévoir une temporisation supplémentaire associée à ce même moteur électrique 105 en cas d'arrêt du véhicule avec coupure de son moteur, afin de retarder l'arrêt dudit moteur électrique, et de garantir ainsi que la deuxième came 112 est effectivement au contact de la butée mobile associée 114. Cette temporisation supplémentaire sera de préférence courte, par exemple de l'ordre de quelques minutes, pour une position du sélecteur manuel 109 correspondant à une période de repos, mais nettement plus longue, par exemple de l'ordre de 24 à 48 heures pour les autres positions dudit sélecteur manuel correspondant à une période de chargement/déchargement ou à une période de réparation.

Conformément à un aspect essentiel de la présente invention, le module d'inscription 100 comporte un boîtier 136 dans lequel sont logés les moyens d'entraînement 107, 108 des premiers 101 et des seconds 102 moyens inscripteurs, et sur lequel est monté le moteur électrique 105, de façon à constituer un sous-ensemble fonctionnel interchangeable. Ainsi que cela est visible sur la vue éclatée de figure 9, le boîtier 136 comporte en l'espèce deux platines complémentaires 137, 138 définissant des paliers pour les axes des parties tournantes des moyens d'entraînement 107, 108. Le moteur électrique 105 est ainsi fixé sur la platine supérieure 137 par sa plaquette 175, à l'aide de vis 176. Une ouverture 190 est prévue dans la platine supérieure 137, pour le passage de la vis sans fin 155 et du pignon 160. Une fois que le moteur électrique 105 est monté sur la platine supérieure, seul dépasse de celle-ci le boîtier dudit moteur, avec son connecteur de raccordement 177. Pour ce qui est de la platine inférieure 138, les seules parties qui saillent inférieurement de cette platine sont l'axe de transmission 139 du totalisateur de distance 106 et l'extrémité de commande notée 140 du sélecteur manuel 109, extrémité sur laquelle est monté un bouton de commande 140' visible sur les figures 10 et 12. La vue éclatée de la figure 9 permet en outre de distinguer, sur la platine inférieure 139, la première butée fixe 113 qui intervient en position de conduite automatique pour arrêter la deuxième came 112 (voir les figures 8a et 8b), et la deuxième butée fixe 122 associée à la pièce de butée 117 portant la butée mobile 114 : en l'espèce, ces deux butées fixes 113 et 122 sont des excroissances prévues sur la face intérieure de la platine inférieure 138.

Ainsi que cela a été dit plus haut, l'intégration des moyens d'entrainement 107 et 108 dans le boîtier 136 est obtenue en définissant tous les paliers associés aux axes des parties tournantes de ces moyens d'entrainement, ce qui permet de réaliser les parties tournantes en une seule pièce en matière plastique avec leur axe de rotation, sans que ce soit au détriment de la précision ; ceci constitue un avantage notable au regard des techniques connues, dans lesquelles les moyens d'entraînement classiques comportaient un axe métallique rapporté, tourillonnant sur une portion associée du boîtier de l'enregistreur. On distingue ainsi sur la figure 9 l'axe 170 de la pièce 127 portant la première came 111, ledit axe tourillonnant sur les deux platines du boîtier 136, en particulier dans le fût d'appui 168 de la platine inférieure 138. Un paillon élastique 169 assure la force d'application nécessaire qui permet d'entraîner la deuxième came 112 par friction du fait de la rotation permanente de la première came 111. On distingue également l'axe commun 171 des pignons 161 et 162 (constituant une pièce unique), ledit axe tourillonnant dans des perçages 174 associés de chaque platine du boîtier. Il en va de même pour la pièce comportant les pignons 157 et 158, dont l'axe 196 tourillonne dans des perçages 197 des platines. L'axe 192 du pignon 159 tourillonne quant à lui dans un perçage 193 de la platine supérieure 137, tandis que la portion inférieure de cette même pièce 194 tourillonne dans un perçage 195 plus large de la platine inférieure 138, ce perçage 195 constituant ainsi un palier précis pour l'entrainement en rotation de l'axe de transmission 139 du totalisateur de distance. Il en va également de même pour la pièce 146 portant la came odomètre en forme de coeur 145, dont l'axe 184 tourillonne dans des perçages associés 185 de chacune des platines.

Le parallélisme de tous ces différents axes est assuré par un alignement parfait de chacune des platines constituant le boîtier 136, cet alignement étant repéré par des moyens de registration tels que le picot 136' de la platine supérieure 137, qui est reçu dans un perçage associé 136" de la platine inférieure 138. La liaison des deux platines est par exemple assurée par des moyens d'encliquetage, tels que les fourches 186 de la platine inférieure 138 reçues dans des fentes associées 187 de la platine supérieure 137.

Par ailleurs, la platine supérieure 137 assure le support des deux pièces 151, et 150-149 d'axe horizontal. La pièce 151 présente des extrémités d'axe 179 qui sont reçues dans des pattes d'encliquetage associées 180 de la platine supérieure 137 (on ne distingue sur la figure 9 qu'une seule de ces deux pattes). De la même façon, les extrémités d'axe 181 de la pièce constituant le pignon 150 et la vis sans fin 149 sont reçues dans des pattes d'encliquetage telles que la patte 182 de la platine supérieure 137. Un positionnement correct est assuré par des paillons élastiques : le paillon 173 associé à la pièce 151 a déjà été décrit, et son importance est grande dans la mesure où il est associé à la liaison d'accouplement débrayable 110. Pour la pièce formant le pignon 150 et la vis sans fin 149, on distingue un paillon identique 169.

Les deux platines du boîtier 136 assurent également le tourillonnement de la butée mobile 114 et de la tringle 118 du sélecteur manuel 109 qui la supporte. L'extrémité supérieure de la tringle 118 du sélecteur manuel 109 passe par un perçage 189 de la platine supérieure 137, tandis que la platine inférieure 138 présente un palier 188 recevant une portion cylindrique 117' (visible sur la figure 12) de la tringle 118 du sélecteur manuel 109. Des moyens analogues peuvent être prévus sur les deux platines pour le support d'un sélecteur manuel supplémentaire en vue d'une application bi-chauffeur, ainsi que cela sera décrit plus loin en regard de la figure 13.

La coupe de la figure 12 permet de mieux distinguer les deux cames 111, 112, et la butée mobile portée par le sélecteur manuel 109, lorsque les deux platines 137 et 138 sont assemblées l'une contre l'autre pour constituer le boîtier 136. La fente 136' schématise la ligne de contact de ces deux platines. On distingue en particulier le montage des deux cames l'une contre l'autre, avec le tourillonnement de l'axe 170 qui les supporte, et le ressort de pression constitué par le paillon 169. Cette figure permet également de distinguer le montage de la lame ressort 124 de l'indexeur 119 : la platine supérieure 137 porte ainsi deux pions fixes saillants 172 qui assurent le blocage en rotation de cette lame ressort 124, dont les extrémités présentent des encoches associées, ainsi que cela est visible sur les figures 11a, 11b, et 11c décrites plus haut. On distingue également sur la figure 12 la partie centrale de la lame ressort 124, qui est cintrée pour pouvoir pénétrer dans l'un des crans 125 de la roue crantée 123.

Ainsi qu'on peut l'observer sur la figure 9, la platine inférieure 138 présente en outre une lumière 167 permettant le passage de la patte 165 du chariot 163 des activités chauffeur. Le chariot 163, qui oscille sous la platine inférieure 138, est ainsi au contact des cames 111 et 112 par l'intermédiaire de sa patte 165 qui pénètre à l'intérieur du boîtier 136.

En position de conduite automatique, l'amplitude d'oscillations est maximale : cette amplitude $e_1$ représentée sur les figures 2a et 2b pourra être de l'ordre de 2,4 mm. Lorsque le véhicule est à l'arrêt, l'amplitude d'oscillations du chariot des activité chauffeur dépend de la position du sélecteur manuel 109 : en position de réparation (figure 11a) on trouve une amplitude d'oscillations $e_2$ qui est par exemple de l'ordre de 1,6 mm, en position de chargement/déchargement (figure 11b) on trouve une amplitude d'oscillations $e_3$ qui est par exemple de l'ordre de 0,8 mm, et enfin en position de repos (figure 11c) on trouve une amplitude d'oscillations $e_4$ qui est par exemple égale à zéro.

Ainsi que cela a été précisé plus haut, il est avantageux de prévoir que le module d'inscription selon l'invention puisse être utilisé dans le cadre d'une application bi-chauffeurs. Dans ce cas, les seconds moyens inscripteurs 102 sont dédoublés de façon connue en soi pour un enregistrement sur deux disques porte-diagramme superposés de manière isoaxique, de façon à pouvoir distinguer une utilisation du véhicule par l'un ou l'autre de deux chauffeurs lorsque ledit véhicule est à l'arrêt.

Dans ce cas, les moyens d'entraînement 108 des seconds moyens inscripteurs comportent en outre des organes d'entraînement supplémentaires 132, 133, 134, en prise avec le moteur électrique 105, de façon à entraîner les seconds moyens inscripteurs associés à l'un ou l'autre des deux chauffeurs selon la position d'un sélecteur manuel supplémentaire 135 préru à cet effet. L'organe 132 présente un pignon qui est en prise avec le pignon 126 de la pièce 127 portant la première came 111, cet organe 132 tourillonnant par des perçages tels que 132' ménagés à cet effet dans les platines constituant le boîtier. L'organe 133 présente un pignon engrènant avec le pignon de l'organe 132, et tourillonne sur la platine inférieure 138 par une portion cylindrique enchâssée sur un axe 134, dont le pignon saille inférieurement en dessous de la platine inférieure 138 de façon à pouvoir remplir sa fonction d'entraînement. On distingue sur la figure 13 différents organes d'entraînement supplémentaires, et plusieurs moyens de tourillonnement ; on notera toutefois que l'organe 133 est ici maintenu par un téton 133' porté par la platine supérieure 137.

Il convient de noter que l'axe d'entraînement 134 permet d'entraîner le pignon d'entraînement 453 précédemment mentionné, qui fait partie d'un mécanisme intégré dans la porte de l'enregistreur.

La figure 13 permet également de distinguer le sélecteur manuel supplémentaire 135 présentant une extrémité inférieure de la commande 141 destinée à recevoir un bouton de sélection (non représenté ici). Ce sélecteur manuel supplémentaire 135 porte également un taquet 198, surmonté d'une roue d'indexage 199 coopérant avec un ressort d'indexage 124 : l'indexeur constitué par la roue crantée 199 et la lame ressort 124 est identique à l'indexeur 119 précité du sélecteur manuel 109, et permet ainsi de marquer chacune des trois positions de ce sélecteur manuel supplémentaire 135. La roue crantée 199 porte également deux taquets saillants radialement 199', 199" limitant le débattement angulaire du sélecteur manuel supplémentaire 135 par coopération avec une autre butée fixe associée 178 prévue à cet effet sur la platine inférieure 138. Le sélecteur manuel supplémentaire 135 se prolonge, au-dessus de la roue d'indexage 199, par une tige passant par le perçage 183' associé de la platine supérieure 137, tout comme le sélecteur manuel 109 dont la tige supérieure se prolonge pour passer à travers le perçage associé 189 : les extrémités supérieures des sélecteurs manuels 109 et 135 servent pour procurer un contact électrique permettant de repérer la position angulaire des sélecteur manuels associés dans chacune des trois positions de celui-ci lorsque le véhicule est à l'arrêt. La roue d'indexage 199 tourillonne sur la platine inférieure 138 par un palier 183. De ce fait, le taquet 198 est, lorsque le dispositif est monté dans le boîtier fermé 136, en dessous de la platine inférieure 138 : ce taquet 198 permet d'agir sur le levier pivotant 91 précédemment décrit, qui porte la came tournante 93 dont une portion coopère avec l'extrémité du coulisseau 88 d'activités deuxième chauffeur.

Ainsi, dans le cadre d'une application bi-chauffeurs, l'axe de sortie 134 faisant partie des organes d'entraînement supplémentaires et l'extrémité de commande 141 du sélecteur manuel supplémentaire 135 saillent également de la platine inférieure 138 du boîtier 136.

Il convient d'observer que la platine inférieure 138 comportant les moyens de tourillonnement et de butée associés aux organes supplémentaires d'entraînement 132, 133, 134 et au sélecteur manuel supplémentaire 135 peut être indifféremment utilisée dans la version à un chauffeur ou deux chauffeurs. C'est ainsi que, sur la vue éclatée de la figure 9, on peut constater la présence de ces moyens, bien que ceux-ci n'interviennent pas dans la version à un chauffeur. Ceci constitue naturellement un avantage important, dans la mesure où il est aisé d'équiper l'ensemble fonctionnel illustré en figure 9 en vue d'une application bi-chauffeurs: après avoir ouvert le boîtier 136, il suffit alors de mettre en place des organes supplémentaires d'entraînement 132, 133, 134, et le sélecteur manuel supplémentaire 135.

Il convient également d'observer que la position de conduite automatique n'intervient en réalité qu'en version un chauffeur : en effet, il est dans la pratique suffisant de s'intéresser aux activités chauffeur lorsque le véhicule est à l'arrêt pour l'un ou l'autre des deux chauffeurs, de sorte que l'entraînement du ou des chariots d'activités n'est organisé que lorsque le véhicule est à l'arrêt, dans l'une quelconque des trois positions du sélecteur manuel associé au chauffeur concerné.

On va maintenant décrire le module vitesse ou compte-tours 200, en se référant à la figure 14.

La vue éclatée de la figure 14 permet de bien distinguer les différents organes constitutifs de ce module 200, dont certains ont déjà été précédemment évoqués. La platine inférieure 238 de ce module porte le moteur électrique 205 fixé par des vis 245. L'arbre de sortie 246 du moteur 205 porte un pignon 247 (par exemple à douze dents) engrenant avec un mobile 248, ou plus précisément avec le pignon inférieur 249 de ce mobile (ce dernier pignon étant par exemple à dix dents). Le pignon supérieur 250 de ce mobile 248, par exemple à soixante-quatre dents, engrène avec un mobile 251, ou plus exactement avec le pignon inférieur 252 de ce mobile, lequel est par exemple à douze dents. Le mobile 251 porte un pignon 253, qui est par exemple à cinquante dents, lequel engrène avec le pignon de sortie 213 du module 200.

C'est ce pignon de sortie 213 qui engrène avec la roue d'entraînement 211 commandant le déplacement de la crémaillère du chariot vitesse, ainsi que cela a été expliqué en référence à la figure 2.

Ainsi que cela est classique en la matière, il est prévu un capteur d'information électronique visant à entraîner le moteur électrique 205 dans un sens ou dans l'autre. Il est ainsi prévu une piste de potentiomètre 254 montée dans un puits associé 255 de la platine inférieure 238. Cette piste de potentiomètre 254 coopère par exemple avec un balai 256 porté par un plateau supérieur de balai 257 dont la périphérie est un pignon engrènant directement avec le pignon de sortie 213.

Le plateau supérieur de balai 257 sert d'abord de potentiomètre d'asservissement, en traduisant la position angulaire de l'arbre de sortie du moteur. Cependant, il est intéressant que ce plateau 257 soit surmonté d'un pignon 218, précédemment nommé pignon de sortie supplémentaire, ce pignon ne servant en réalité que pour une application du module 200 à une utilisation comme module compte-tours.

La platine supérieure 237 présente d'une part une ouverture 224 permettant de laisser passer le pignon de sortie supplémentaire 218, et d'autre part une autre ouverture 225 formant palier pour le pignon de sortie 213 et laissant dépasser la protubérance axiale 222 qui peut recevoir une aiguille compte-tours. Les deux platines sont superposées l'une contre l'autre, de préférence en utilisant un système de registration tel que téton 259 et perçage associé 260, et sont réunies l'une à l'autre au moyen de vis 258.

Chacune des parties tournantes peut être réalisée en une seule pièce moulée en matière plastique, cette pièce présentant un axe monobloc dont les extrémités sont reçues dans des perçages ou paliers associés de chacune des deux platines constituant le boîtier du module 200. On distingue ainsi l'axe 261 du mobile 248 qui est reçu dans un perçage 262 de la platine supérieure 237 ; de même, l'axe 263 du mobile 251 est reçu dans un perçage 264 de la platine supérieure 237 et dans un appui 265 de la platine inférieure 238. On distingue également une particularité de la platine inférieure 238, en dessous de l'axe du pignon de sortie 213 : il est en effet prévu un logement cylindrique 266 associé au ressort spiral 80 précédemment cité.

Ceci représente un avantage notable sur le plan du nombre de pièces, car les enregistreurs connus utilisent en général sept axes métalliques rapportés pour l'ensemble fonctionnel vitesse, auxquels s'ajoutent éventuellement sept autres axes rapportés pour l'ensemble fonctionnel compte-tours.

On va maintenant décrire, en se référant à la figure 15, le module de montre 300.

Comme le boîtier 236 du module 200 précité, dont les platines définissent des paliers pour les axes des parties tournantes des moyens d'entraînement 201, le boîtier 336 du module de montre 300 comporte également deux platines complémentaires 337, 338 qui définissent des paliers pour les axes des parties tournantes des moyens d'entraînement 301 logés dans ledit boîtier. La platine inférieure 338 porte le moteur électrique 305 qui est fixé au moyen de vis 341. L'arbre de sortie 342 du moteur 305 porte un pignon 343, qui est par exemple à huit dents. On trouve ensuite un certain nombre de mobiles, dont l'agencement est classique pour de tels enregistreurs. Outre un pignon anti-retour 344 porté par son axe 345 monté sur la platine supérieure 337, on trouve successivement des mobiles 346, 347, 348, 349 menant ainsi à la roue des heures 309 surmontée de l'axe associé 303 saillant de la platine supérieure 337 par un palier 363. L'axe 303 reçoit, de façon connue, un axe de chaussée 304 correspondant aux minutes, en partie inférieure duquel sont montés successivement un pignon de chaussée 353, un ressort de friction 354, un disque de friction 355, une roue de centre 356, un autre disque de friction 357, et enfin un canon de friction 358. Un tel dispositif de friction est classiquement utilisé pour permettre une remise à l'heure de la montre sans entraîner le moteur. La roue des heures 309 entraîne un mobile 340, comportant le pignon 311 précédemment mentionné, et inférieurement le pignon de sortie 302 du module de montre 300. Rappelons que c'est ce pignon de sortie 302 qui est en prise avec le plateau porte-disque 7, 7' précédemment mentionné.

Il est également prévu une roue intermédiaire 352, en prise avec un mobile 351 portant une molette de remise à l'heure 306, ladite molette saillant latéralement du boîtier 336 dudit module.

Comme précédemment, les platines complémentaires 337 et 338 assurent les fonctions de palier pour la grande majorité des parties tournantes logées dans le module de montre 300 : en l'espèce, un seul axe est de préférence réalisé en métal et rapporté, c'est-à-dire l'axe 350 du mobile 349, et ce en raison de la très petite taille de cet axe.

Ceci représente un avantage notable sur le plan du nombre de pièces, car les enregistreurs connus utilisent en général, pour cet ensemble fonctionnel, dix axes métalliques rapportés, chassés dans la porte qui est alors réalisée sous forme d'un bloc en aluminium.

Les deux platines complémentaires 337 et 338 sont alors superposées l'une sur l'autre, en utilisant de préférence des moyens de registration tels que le picot 364 et le perçage associé 365, et la liaison est assurée au moyen de vis 360.

La figure 15 permet également de distinguer, en partie inférieure du moteur électrique 305, le circuit imprimé associé 361 et son connecteur 362.

Le module de montre 300 permet ainsi d'assurer l'entraînement en temps réel du papier, et l'entraînement des aiguilles de montre.

D'une façon générale, les boîtiers 136, 236 et 336 des modules 100, 200 et 300 précédemment décrits pourront être réalisés en matière plastique, celle-ci devant être cependant de préférence relativement stable afin de préserver la précision : on utilisera par exemple du polyoxyde de phénylène.

L'enregistreur qui a été décrit présente ainsi de nombreux avantages. Outre les avantages procurés par la conception modulaire, il convient de noter que l'enregistreur de l'invention peut être réalisé avec un minimum de pièces (environ 220 pièces, alors que les enregistreurs classiques en comportent environ 360), et avec un coût de fabrication très sensiblement abaissé. Cet enregistreur peut ainsi comporter un maximum de pièces en matière plastique, et sans que ce soit au détriment de la précision ; de plus, un tel enregistreur est de facto moins sensible aux grands écarts de températures, et présente une grande stabilité d'utilisation.

L'invention n'est pas limitée aux modes de réalisation qui viennent d'être décrits, mais englobe au contraire toute variante reprenant, avec des moyens équivalents, les caractéristiques essentielles figurant aux revendications.

**Revendications**

1. Enregistreur de route de véhicule, comportant un boîtier fixe, une porte articulée sur ledit boîtier en face avant de celui-ci, un ensemble fonctionnel de montre disposé dans la porte et associé à un mécanisme permettant d'entraîner un ou deux disques porte-diagramme disposés sur la face intérieure de ladite porte, et des moyens inscripteurs permettant l'enregistrement de plusieurs paramètres d'utilisation du véhicule grâce à des organes scripteurs associés, caractérisé par le fait que :
   . l'ensemble fonctionnel de montre se présente sous la forme d'un module indépendant interchangeable (300), comportant un boîtier (336) pouvant se fixer dans la porte (3) de l'enregistreur, dans lequel est logé le mécanisme d'entraînement du ou des disques porte-diagramme, et sur lequel est monté un moteur électrique (305) entraînant ledit mécanisme et la montre de l'enregistreur ; et
   . les moyens inscripteurs comprennent des ensembles fonctionnels associés à l'enregistrement de la vitesse, de la distance parcourue, et de différents modes d'utilisation du véhicule, lesdits ensembles fonctionnels se présentant chacun sous la forme d'un module indépendant interchangeable (200 ; 100), comportant un boîtier (236 ; 136) pouvant se fixer en arrière du boîtier (2) de l'enregistreur, dans lequel sont logés des moyens (201 ; 107,108) servant à l'entraînement des organes scripteurs associés (203 ; 143, 164) lorsque la porte (3) dudit enregistreur est fermée, et sur lequel est monté un moteur électrique (205 ; 105) actionnant lesdits moyens d'entraînement.

2. Enregistreur de route selon la revendication 1, caractérisé par le fait que le module fonctionnel indépendant (200) associé à l'enregistrement de la vitesse est monté sur un support (210) recevant une roue (211) d'actionnement de l'organe scripteur associé (203), ladite roue comportant un premier pignon (212) engrènant avec le pignon de sortie (213) dudit module, et un deuxième pignon (214) engrènant avec une crémaillère (215) faisant partie d'un chariot vitesse (216) qui porte l'organe scripteur associé (203).

3. Enregistreur de route selon la revendication 2, caractérisé par le fait que la roue d'actionnement (211) entraîne en rotation un moyeu flottant (217) qui est couplé, lorsque la porte (3) de l'enregistreur est fermée, à l'aiguille indicatrice de vitesse (10) montée sur ladite porte.

4. Enregistreur de route selon la revendication 1, caractérisé par le fait qu'un module fonctionnel unique (100) est associé à l'enregistrement de la distance parcourue (odomètre) et des différents modes d'utilisation du véhicule (activités chauffeur).

5. Enregistreur de route selon la revendication 4, caractérisé par le fait que le module fonctionnel unique (100) comporte deux cames de sortie (145 ; 111) d'axes parallèles, actionnant respectivement un chariot odomètre (142) et un chariot des activités chauffeur (163) portant l'organe scripteur associé (143 ; 164).

6. Enregistreur de route selon la revendication 2 et l'une des revendications 4 et 5, caractérisé par le fait que le support (210) du module (200) associé à la vitesse, et le module (100) associé à la distance parcourue et aux différents modes d'utilisation, sont tous deux montés sur une platine intermédiaire rigide (5) fixée en arrière du boîtier (2) de l'enregistreur.

7. Enregistreur de route selon les revendications 2, 5 et 6, caractérisé par le fait que la platine intermédiaire (5) supporte également deux rails parallèles (6) assurant le guidage des chariots coulissants vitesse (216), odomètre (142), et activités chauffeur (163).

8. Enregistreur de route selon l'une des revendications 2 à 7, caractérisé par le fait que le module (200) associé à la vitesse comporte un pignon de sortie supplémentaire (218) permettant une utilisation comme ensemble fonctionnel indépendant associé à l'enregistrement du régime moteur, le boîtier (236) dudit module étant dans ce cas fixé dans la porte (3) de l'enregistreur, à côté du module fonctionnel de montre (300).

9. Enregistreur de route selon la revendication 8, dans lequel l'organe scripteur (219) associé à l'enregistrement du régime moteur est monté tournant dans la porte (3) dudit enregistreur de façon à permettre une inscription sur la face inférieure du disque porte-diagramme, ou du premier disque porte-diagramme lorsque deux disques sont utilisés en étant superposés de manière isoaxique mais écartés l'un de l'autre dans la zone de ladite inscription, caractérisé par le fait qu'il comporte un secteur denté (220) dont l'axe (221) est accouplé audit organe scripteur tournant, ledit secteur denté engrènant avec le pignon de sortie supplémentaire (218) du module (200) associé à l'enregistrement du régime moteur.

10. Enregistreur de route selon les revendications 8 et 9, caractérisé par le fait que le pignon de sortie supplémentaire (218) du module (200) associé à l'enregistrement du régime moteur est en prise avec le pignon de sortie (213) dudit module, ledit pignon de sortie (213) recevant coaxialement l'axe (222) de l'aiguille compte-tours (11) également montée sur la porte (3) de l'enregistreur.

11. Enregistreur de route selon l'une des revendications 1 à 10, caractérisé par le fait que le module fonctionnel de montre (300) comporte un pignon de sortie (302) saillant latéralement du boîtier (336) dudit module, et engrènant avec un plateau porte-disque (7, 7') monté sur la porte (3) de l'enregistreur, de l'autre côté du fond de ladite porte, l'accès dudit plateau étant rendu possible par une fenêtre (8) prévue à cet effet dans le fond de la porte, ainsi que les deux axes coaxiaux (303, 304) associés aux deux aiguilles (12, 13) de la montre et dont les extrémités saillent supérieurement dudit boîtier.

12. Enregistreur de route selon la revendication 11, caractérisé par le fait que le module de montre (300) comporte également une molette de remise à l'heure (306) saillant latéralement du boîtier (336) dudit module.

13. Enregistreur de route selon l'une des revendications 1 à 12, caractérisé par le fait que le boîtier (136 ; 236 ; 336) de chaque module fonctionnel indépendant (100 ; 200 ; 300) comporte deux platines complémentaires (137, 138 ; 237, 238 ; 337, 338), sur l'une desquelles est fixé le moteur électrique associé (105 ; 205 ; 305), lesdites platines définissant des paliers pour les axes des parties tournantes des moyens d'entraînement (107, 108 ; 201 ; 301) logés dans le boîtier concerné (136 ; 236 ; 336).

14. Enregistreur de route selon les revendications 2 et 13, caractérisé par le fait que le boîtier (236) du module (200) associé à la vitesse comporte une platine inférieure (238) en extérieur de laquelle est fixé le moteur électrique associé (205), et une platine supérieure (237) de laquelle saille, par une échancrure latérale associée (223), le pignon de sortie (213) dudit module.

15. Enregistreur de route selon les revendications 8, 10 et 14, caractérisé par le fait que la platine supérieure (237) du module (200) présente, en vue d'une utilisation pour l'enregistrement du régime moteur, deux ouvertures (224, 225) laissant dépasser d'une part le pignon de sortie supplémentaire (218) dudit module, et d'autre part une excroissance axiale (222) du pignon de sortie (213) associée à l'aiguille compte-tours (11).

16. Enregistreur de route selon les revendications 11, 12 et 14, caractérisé par le fait que le boîtier (336) du module de montre (300) comporte une platine inférieure (338) en extérieur de laquelle est fixé le moteur électrique associé (305), et une platine supérieure (337) de laquelle saillent les axes (303, 304) des aiguilles (12, 13) de la montre, la platine inférieure (338) présentant en outre une ouverture (307) laissant dépasser le pignon de sortie (302) dudit module, ainsi qu'un axe (308) sur lequel tourillonne la molette de remise à l'heure (306).

17. Enregistreur de route selon les revendications 4, 5 et 14, caractérisé par le fait que le boîtier (136) du module odomètre/activités chauffeur (100) comporte une platine supérieure (137) sur laquelle est fixé le moteur électrique associé (105), et une platine inférieure de laquelle saillent un axe de transmission (139) associé au totalisateur de distance (106) de l'enregistreur et l'extrémité de commande (140) du sélecteur manuel (109) agissant sur les moyens inscripteurs (102) correspondant aux différents modes d'utilisation du véhicule à l'arrêt.

18. Enregistreur de route selon l'une des revendications 1 à 17, dans lequel deux disques porte-diagramme sont prévus pour une utilisation bi-chauffeurs, caractérisé par le fait que le module de montre (300), et l'éventuel module (200) associé à l'enregistrement du régime moteur, sont montés dans la porte (3) de l'enregistreur, dans la zone de l'articulation de celle-ci, de telle façon que l'espace restant soit suffisant pour recevoir une table basculante (15) permettant une inscription simultanée sur la face supérieure du deuxième disque porte-diagramme, ainsi que l'organe scripteur associé (16) et les moyens de support (17) et d'actionnement (18) dudit organe scripteur.

19. Enregistreur de route selon les revendications 17 et 18, caractérisé par le fait que le module odomètre/activités chauffeur (100) comporte des organes d'entraînement supplémentaires (132, 13 3, 134), dont un axe de sortie (134) saille de la platine inférieure (138) du boîtier (136) dudit module, ledit axe de sortie étant, lorsque la porte (3) de l'enregistreur est fermée, en prise avec les moyens d'actionnement (18) de l'organe scripteur (16) réalisant une inscription du deuxième disque porte-diagramme correspondant aux activités du deuxième chauffeur.

FIG.1

# FIG.2

**FIG.3**

FIG_4

FIG.5

FIG.6

FIG.7

FIG.8a

FIG.8b

FIG.9

# FIG_10

FIG.11a

FIG.11b

FIG.11c

FIG.12

FIG_13

## FIG_14

31

## FIG_15

Office européen
des brevets

**RAPPORT DE RECHERCHE EUROPEENNE**

Numero de la demande

EP    91 40 0535

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A, D | EP-A-0328454 (JAEGER)<br>* abrégé; figures *<br>--- | 1 | G07C5/12<br>G01P1/12 |
| A | EP-A-0286511 (JAEGER)<br>* abrégé; figures *<br>--- | 1 | |
| A, D | EP-A-0207820 (JAEGER)<br>* abrégé; figures *<br>--- | 1 | |
| A, D | EP-A-0246122 (JAEGER)<br>* abrégé; figures *<br>--- | 1 | |
| A, D | EP-A-0012223 (KIENZLE)<br>* abrégé; figures *<br>----- | 1 | |

**DOMAINES TECHNIQUES RECHERCHES (Int. Cl.5)**

G07C
G01P
G01D

Le présent rapport a été établi pour toutes les revendications

| Lieu de la recherche | Date d'achèvement de la recherche | Examinateur |
|---|---|---|
| LA HAYE | 04 JUIN 1991 | MEYL D. |